# EUROPEAN PATENT APPLICATION

(11) **EP 3 982 446 A1**
(43) Date of publication of application: **13.04.2022**
(21) Application number: 20819563.6
(22) Date of filing: 03.06.2020
(51) Int. Cl.: H01M 6/16, H01M 10/052, H01M 10/0567, H01M 10/0568, H01M 10/0569, C01B 32/28

(54) **BATTERY ELECTROLYTIC SOLUTION AND LITHIUM ION BATTERY**

(30) Priority: 05.06.2019 JP 2019105066
(71) Applicant: Daicel Corporation, Osaka 530-0011 (JP)
(72) Inventor: SHIRO, Daisuke, Tokyo 108-8230 (JP); UMEMOTO, Kouichi, Tokyo 108-8230 (JP); KUME, Atsushi, Tokyo 108-8230 (JP)
(74) Representative: Grünecker Patent- und Rechtsanwälte PartG mbB
(86) International application number: PCT/JP2020/021926
(87) International publication number: WO 2020/246501

(57) **Abstract**

Provided is a battery electrolytic solution in which a nanocarbon material is highly dispersed. The battery electrolytic solution contains: a dispersion medium; an electrolyte dissolved in the dispersion medium; and a nanocarbon material dispersed with an average dispersed particle size of 500 nm or less in the dispersion medium. The battery electrolytic solution preferably contains the nanocarbon material in an amount from 10 to 100000 mass ppm. The nanocarbon material is preferably at least one selected from the group consisting of a nanodiamond, a fullerene, a graphene, a graphene oxide, a nanographite, a carbon nanotube, a carbon nanofilament, an onion-like carbon, a diamond-like carbon, an amorphous carbon, a carbon black, a carbon nanohorn, and a carbon nanocoil.

## Description

### Technical Field

The present disclosure relates to a battery electrolytic solution and a lithium ion battery. More specifically, the present disclosure relates to a battery electrolytic solution in which a nanocarbon material is dispersed and a lithium ion battery employing the battery electrolytic solution. The present application claims priority from the Japanese Patent Application No. 2019-105066, filed in Japan on June 5, 2019, the contents of which are incorporated herein by reference.

### Background Art

Nano-sized fine substances are known to have novel characteristics that cannot be achieved in a bulk state. For example, nanodiamond particles (i.e., nano-sized diamond particles) exhibit mechanical strength, a high refractive index, thermal conductivity, insulating properties, antioxidation properties, and an action of promoting the crystallization of resins, and the like. However, nanodiamond particles typically have large proportions of surface atoms, a sum of van der Waals forces that can act between surface atoms of adjacent particles is strong, and aggregation tends to occur. In addition, in the case of nanodiamond particles, Coulomb interaction between crystalline surfaces of adjacent crystals may contribute to agglutination, which is a phenomenon where particles form a significantly firm cluster. Thus, it was extremely difficult to disperse nanodiamond particles to be in a state of primary particles in an organic solvent or in a resin. Therefore, the surface of nanodiamond particles is modified so as to impart dispersibility to the nanodiamond particles to suppress aggregation.

In recent years, there have been reports about nanodiamond particles being used in electrolytic solutions. For example, Non-Patent Literature 1 describes that when charging and discharging are performed using LiPF₆ as an electrolyte, a mixture of equal parts ethylene carbonate and diethyl carbonate as a solvent, and an electrolytic solution in which an organic modified nanodiamond is dispersed, a smooth layer of lithium grew on the electrodes.

### Citation List

### Non-Patent Literature

Non-Patent Literature 1: Xin-Bing, Chang et al., Nature Communications, 8, 337-345: 2017.

### Summary of Invention

### Technical Problem

However, according to Non-Patent Literature 1, the dispersed particle size of nanodiamond in the electrolytic solution in which a nanodiamond is dispersed is larger than the holes in a separator commonly used in lithium ion batteries. As a result, the amount of nanodiamond that can pass through the separator is considered to be low. As such, the effect of the electrolytic solution in which a nanodiamond is dispersed according to Non-Patent Literature 1 is considered limited. Therefore, an electrolytic solution in which a nanocarbon material is highly dispersed is desirable.

In light of this, an object of the present disclosure is to provide a battery electrolytic solution in which a nanocarbon material is highly dispersed and a lithium ion battery employing the battery electrolytic solution.

### Solution to Problem

The present disclosure provides a battery electrolytic solution containing a dispersion medium, an electrolyte dissolved in the dispersion medium, and a nanocarbon material dispersed with an average dispersed particle size of 500 nm or less in the dispersion medium.

The battery electrolytic solution preferably contains the nanocarbon material in an amount from 10 to 100000 mass ppm.

The nanocarbon material contained in the battery electrolytic solution is preferably at least one selected from the group consisting of a nanodiamond, a fullerene, a graphene, a graphene oxide, a nanographite, a carbon nanotube, a carbon nanofilament, an onion-like carbon, a diamond-like carbon, an amorphous carbon, a carbon black, a carbon nanohorn, and a carbon nanocoil.

The nanocarbon material contained in the battery electrolytic solution is preferably a nanodiamond particle having a primary particle size of 10 nm or less.

The nanocarbon material contained in the battery electrolytic solution is preferably a surface-modified nanodiamond, the surface-modified nanodiamond containing a nanodiamond particle and a surface-modifying group having a polyoxyalkylene chain that surface-modifies the nanodiamond particle.

The polyoxyalkylene chain is preferably at least one selected from the group consisting of a polyethylene glycol chain, a polypropylene glycol chain, and a polybutylene glycol chain.

The surface-modified nanodiamond preferably has a structure in which a terminal of the polyoxyalkylene chain ends with an aliphatic hydrocarbon group.

The surface-modifying group preferably contains a silicon atom.

Furthermore, the nanocarbon material contained in the battery electrolytic solution is preferably a surface-modified nanodiamond, the surface-modified nanodiamond containing a nanodiamond particle and a surface-modifying group that surface-modifies the nanodiamond particle, the polyglycerin chain containing at least one hydroxyl group of which hydrogen atom is substituted by a monovalent organic group.

The surface-modified nanodiamond may have an absorption peak from around 1510 to 1540 cm⁻¹ and an absorption peak from around 1700 to 1730 cm⁻¹ in an FT-IR spectrum.

The surface-modified nanodiamond may have an absorption peak from around 1730 to 1750 cm⁻¹ in an FT-IR spectrum.

The surface-modified nanodiamond may have a peak from around 5 to 45 ppm, a peak from around 60 to 85 ppm, and a peak from around 140 to 200 ppm in a ¹³C-NMR spectrum.

Furthermore, the battery electrolytic solution preferably contains a nanodiamond particle as a nanocarbon material and a dispersant having a mass average molecular weight of 500 or greater and an amine value of 15 mg KOH/g or greater.

The dispersion medium contained in the battery electrolytic solution is preferably at least one selected from the group consisting of ethylene carbonate, propylene carbonate, γ-butyrolactone, dimethyl carbonate, diethyl carbonate, and ethyl methyl carbonate.

The electrolyte contained in the battery electrolytic solution is preferably at least one selected from the group consisting of LiPF₆, LiBF₄, LiN(SO₂CF₃)₂, LiNCF₃SO₃, and LiN(SO₂F)₂.

Furthermore, the present disclosure provides a lithium ion battery employing the battery electrolytic solution.

### Advantageous Effects of Invention

The battery electrolytic solution according to the present disclosure can provide a battery electrolytic solution in which a nanocarbon material is highly dispersed. Furthermore, even when the lithium ion battery according to the present disclosure undergoes repeated charging and discharging or is overcharged, a smooth layer of lithium can be formed, suppressing the formation of dendrites and preventing piercing of the separator by dendrites.

### Brief Description of Drawings

FIG. 1 is a diagram illustrating a ¹³C-NMR spectrum of a surface-modified nanodiamond produced in Example 4.
FIG. 2 is a plotted graph of capacity retention versus cycle number of a battery employing an electrolytic solution in which a surface-modified nanodiamond is dispersed, the battery produced in Example 5.
FIG. 3 is a plotted graph of capacity retention versus cycle number of a battery employing an electrolytic solution in which a surface-modified nanodiamond is not added, the battery produced in Example 5.

### Description of Embodiments

A battery electrolytic solution according to an embodiment of the present disclosure contains at least a dispersion medium, an electrolyte dissolved in the dispersion medium, and a nanocarbon material dispersed in the dispersion medium.

An average dispersed particle size (D50, median size) of the nanocarbon material contained in the battery electrolytic solution is 500 nm or less, preferably 400 nm or less, more preferably 300 nm or less, even more preferably 200 nm or less, and particularly preferably 150 nm or less. A lower limit of the average dispersed particle size is, for example, 5 nm or greater, preferably 10 nm or greater. The average dispersed particle size can be measured using a dynamic light scattering method,

The nanocarbon material preferably is a particle having a primary particle size of 10 nm or less such as from 1 to 10 nm, preferably 8 nm or less such as from 2 to 8 nm, and more preferably 6 nm or less such as from 4 to 6 nm.

Examples of the nanocarbon material include a known or commonly used nanocarbon material, such as a nanodiamond, a fullerene, a graphene, a graphene oxide, a nanographite, a carbon nanotube, a carbon nanofilament, an onion-like carbon, a diamond-like carbon, an amorphous carbon, a carbon black, a carbon nanohorn, and a carbon nanocoil. Among the nanocarbon materials listed above, a nanodiamond (nanodiamond particles) is preferable. One of the nanocarbon materials listed above may be used, or two or more thereof may be used. Note that "nanodiamond" may be referred to as "ND" hereinafter.

The nanodiamond particles (ND particles) are not particularly limited, and known or commonly used nanodiamond particles can be used. The ND particles may be ND particles that have been surface-modified (surface-modified ND), or may be ND particles that have not been surface-modified. Note that the ND particles that have not been surface-modified have hydroxyl groups (-OH) on the surfaces. One type of the ND particles may be used, or two or more types may be used.

Examples of a compound or a functional group that surface-modifies ND particles in the surface-modified ND include a silane compound, a carboxyl group (-COOH), a phosphonate ion or phosphonic acid residue, a surface-modifying group having a vinyl group at a terminal, an amide group, a cation of a cationic surfactant, a group containing a polyoxyalkylene chain, a group containing a polyglycerin chain, and a silane compound. Among the surface-modifying compounds or functional groups listed above, a group containing a polyoxyalkylene chain (polyoxyalkylene chain-containing surface-modifying group) and a group containing a polyglycerin chain (polyglycerin chain-containing surface-modifying group) are preferable from the viewpoint of achieving superior dispersibility in the battery electrolytic solution. One of the surface-modifying compounds or functional groups listed above may be used, or two or more thereof may be used.

Note that a surface-modified ND containing an ND particle and the polyoxyalkylene chain-containing surface-modifying group that surface-modifies the ND particle may be referred to as "polyoxyalkylene chain surface-modified ND". Furthermore, a surface-modified ND containing an ND particle and the polyglycerin chain-containing surface-modifying group that surface modifies the ND particle may be referred to as "polyglycerin chain surface-modified ND".

The surface-modified ND may have zirconia attached (bonded) thereto. The surface-modified ND with zirconia attached thereto may be referred to as "surface-modified nanodiamond composite". That is, the surface-modified ND composite contains the surface-modified ND and zirconia that is attached to the surface-modified ND. Note that the attached state of zirconia may be physical attachment (bonding, adhesion, or the like), may be chemical attachment (covalent bonding with the ND particle or the surface-modifying group, bonding by intermolecular forces, hydrogen bonding, ionic bonding, or the like), or may be both. Only one type of zirconia may be used, or two or more types of zirconia may be used.

The ND particle constituting the surface-modified ND preferably contains a primary particle of the nanodiamond. In addition, a secondary particle in which several to dozens of the primary particles aggregated may be included.

As the ND particles mentioned above, for example, detonation ND (i.e., ND produced by detonation method) and high temperature and high pressure method ND (i.e., ND produced by a high temperature and high pressure method) can be used. Above all, from the viewpoint of superior dispersibility in the battery electrolytic solution, i.e., from the viewpoint of making the particle size of the primary particle in a single-digit nanometer range, a detonation ND is preferred.

The detonation ND mentioned above includes air-cooling detonation ND (i.e., ND produced by an air-cooling detonation method) and water-cooling detonation ND (i.e., ND produced by a water-cooling detonation method). Above all, the air-cooling detonation ND is preferred from the viewpoint of obtaining smaller primary particles compared to the case of the water-cooling detonation ND

Examples of the polyoxyalkylene chain in the polyoxyalkylene chain-containing surface-modifying group include a polyethylene glycol chain, a polypropylene glycol chain, a polytetramethylene glycol chain, and a polybutylene glycol chain. Among these, a polyethylene glycol chain, a polypropylene glycol chain, and a polybutylene glycol chain are preferable. Furthermore, in each polyoxyalkylene chain-containing surface-modifying group, the polyoxyalkylene chain may be composed of only one oxyalkylene, or may be composed of two or more oxyalkylenes. Examples of the polyoxyalkylene chain composed of two or more oxyalkylenes include a polyethylene glycol-polypropylene glycol chain. In a case where the polyoxyalkylene chain is composed of two or more oxyalkylenes, the bonding form of the two or more oxyalkylenes may be a random, alternating, or block form.

The polyoxyalkylene chain-containing surface-modifying group preferably has a structure in which a terminal of the polyoxyalkylene chain ends with an aliphatic hydrocarbon group. More specifically, the hydrogen atom in the hydroxyl group at one of the terminals of the polyoxyalkylene chain is preferably substituted with an aliphatic hydrocarbon group.

The aliphatic hydrocarbon group with which the terminal of the polyoxyalkylene chain is ended is preferably an aliphatic hydrocarbon group having from 1 to 10 carbon atoms, more preferably an aliphatic hydrocarbon group having from 1 to 6 carbon atoms. Examples of the aliphatic hydrocarbon group having from 1 to 10 carbon atoms include linear or branched alkyl groups, such as a methyl group, an ethyl group, a propyl group, an isopropyl group, a butyl group, an isobutyl group, an s-butyl group, a t-butyl group, a pentyl group, a hexyl group, a heptyl group, an octyl group, a 2-ethylhexyl group, and a decyl group; linear or branched alkenyl groups, such as vinyl and allyl groups; and alkynyl groups, such as an ethynyl group and a propynyl group. Among the groups, the linear or branched alkyl groups are preferred.

The polyoxyalkylene chain has a number average molecular weight of, as a polyoxyalkylene, preferably 100 or more such as from 100 to 50000, more preferably 200 or more such as from 200 to 20000, further preferably 500 or more such as from 1000 to 10000, and particularly preferably 1000 or more such as from 1000 to 6000.

The average degree of polymerization (number average degree of polymerization) of the polyoxyalkylene chain is preferably from 2 to 50, more preferably from 4 to 45, even more preferably from 6 to 40. When the average degree of polymerization is 2 or more, the steric hindrance between the surface-modifying groups is sufficient, and dispersion in the dispersion medium is facilitated. When n is 50 or less, the surface-modifying groups are kept from being entangled, and dispersion in the dispersion medium is facilitated. In addition, properties as a nanodiamond material are less likely to be impaired.

The polyoxyalkylene chain-containing surface-modifying group preferably contains a silicon atom. The silicon atom contained in the surface-modifying group is preferably present between the polyoxyalkylene chain and the surface-modified ND particle. The silicon atom is preferably present as a Si-O bond in the surface-modifying group. The polyoxyalkylene chain surface-modified ND preferably has a structure in which the silicon atom in the surface-modifying group is bonded to the ND particle with an oxygen atom interposed therebetween.

The polyoxyalkylene chain-containing surface-modifying group is preferably at least one selected from the group consisting of a group represented by Formula (1) below, a group represented by Formula (2) below, and a group represented by Formula (3) below. The bonds indicated by wavy lines in Formulas (1) to (3) below bond to the surfaces of the nanodiamond particles.

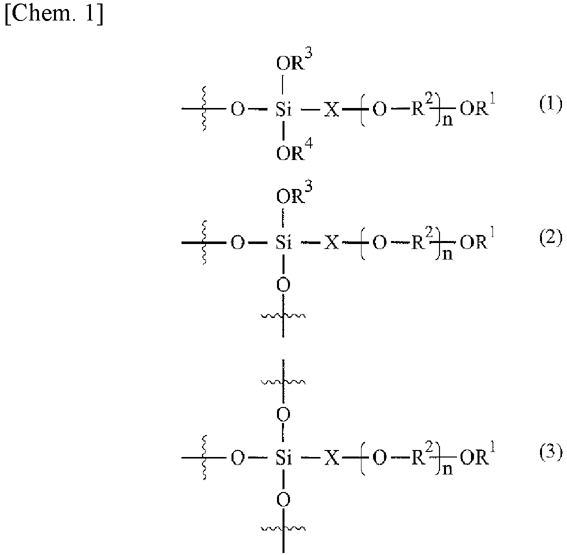

In Formulas (1) to (3) mentioned above, R¹ represents a hydrogen atom or an aliphatic hydrocarbon group. The aliphatic hydrocarbon group mentioned above is preferably an aliphatic hydrocarbon group having from 1 to 10 carbon atoms, more preferably an aliphatic hydrocarbon group having from 1 to 6 carbon atoms. Examples of the aliphatic hydrocarbon group having from 1 to 10 carbons include a linear or branched alkyl group, such as a methyl group, an ethyl group, a propyl group, an isopropyl group, a butyl group, an isobutyl group, an s-butyl group, a t-butyl group, a pentyl group, a hexyl group, a heptyl group, an octyl group, a 2-ethylhexyl group, and a decyl group; a linear or branched alkenyl group, such as a vinyl group and an allyl group; and a alkynyl group, such as an ethynyl group and a propynyl group. Among the groups, the linear or branched alkyl groups are preferred.

In Formulas (1) to (3) mentioned above, R² represents an alkylene group, and is preferably an alkylene group having from 1 to 4 carbon atoms. Examples of the alkylene group having from 1 to 4 carbon atoms include an ethylene group, an isopropylene group, an isobutylene group, and a tetramethylene group. Above all, an ethylene group and an isopropylene group are preferred. A plurality of R² may each be identical or different. In the case of a plurality of R² being different, the bonded form of the oxyalkylene chains (-O-²) mentioned above may be a random, alternating, or block form.

In Formulas (1) to (3) above, n represents an average degree of polymerization (number average degree of polymerization) of the oxyalkylene chains (-O-R²), and has a value of 2 or greater. n is preferably from 2 to 50, more preferably from 4 to 45, even more preferably from 6 to 40. When n is 2 or greater, the steric hindrance between the surface-modifying groups is sufficient, and dispersion in the dispersion medium is facilitated. When n is 50 or less, the surface-modifying groups are kept from being entangled, and dispersion in the dispersion medium is facilitated. In addition, properties as a nanodiamond material are less likely to be impaired.

In Formulas (1) to (3) mentioned above, X represents a single bond or a linking group (a divalent group having one or more atoms). Examples of the linking group include a divalent hydrocarbon group, a urethane bond, a carbonyl group, an ether bond, an ester bound, a carbonate group, an amide group, and a group in which one or more of the groups and bonds are linked.

Examples of the divalent hydrocarbon group include a linear or branched alkylene group having from 1 to 18 carbon atoms and a divalent alicyclic hydrocarbon group. Examples of the linear or branched alkylene group having from 1 to 18 carbon atoms include a methylene group, a methylmethylene group, a dimethylmethylene group, an ethylene group, a propylene group, and a trimethylene group. Examples of the divalent alicyclic hydrocarbon group include cycloalkylene groups (including a cycloalkylidene group), such as a 1,2-cyclopentylene group, a 1,3-cyclopentylene group, a cyclopentylidene group, a 1,2-cyclohexylene group, a 1,3-cyclohexylene group, a 1,4-cyclohexylene group, and a cyclohexylidene group. The number of carbon atoms in the divalent hydrocarbon group is preferably from 1 to 10, more preferably from 2 to 6.

The linking group in X mentioned above preferably includes, in particular, a urethane bond, and more preferably a group in which a urethane bond is linked to a divalent hydrocarbon group (in particular, a linear or branched alkylene group). Furthermore, the silicon atom and the divalent hydrocarbon group (in particular, the linear or branched alkylene group) in X in Formulas (1) to (3) are preferably directly bonded. Specifically, X is preferably -(CH2)k-NH-C(=O)- (C at the left end and C at the right end are bonded respectively to the silicon atom and to O in the polyoxyalkylene chain). It is noted that in the formulas mentioned above, k represents an integer from 1 to 18, and is preferably an integer from 1 to 6, more preferably an integer from 1 to 3.

In Formula (1) mentioned above, R³ and R⁴, which may be identical or different, each represent a hydrogen atom, an aliphatic hydrocarbon group having from 1 to 3 carbon atoms, or a group represented by Formula (a) below. Examples of the aliphatic hydrocarbon group having from 1 to 3 carbons include: a linear or branched alkyl group, such as a methyl group, an ethyl group, a propyl group, and an isopropyl group; a linear or branched alkenyl group, such as a vinyl group and an allyl group; and an alkynyl group, such as an ethynyl group and a propynyl group. Among the groups, the linear or branched alkyl groups are preferred. It is noted that R³ in Formula (2) is also the same as R³ in Formula (1).

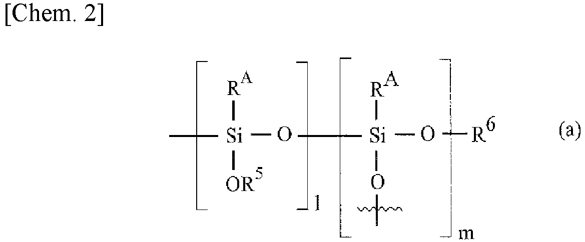

In Formula (a) mentioned above, R^{A} represents [-X-(O-R²)n-OR¹]. X, R¹, R², and n in R^{A} are each the same as those illustrated and described in Formulas (1) to (3) mentioned above, and preferred aspects thereof are also the same. Furthermore, the bonded form in the case of having two or more of (O-R²) is also as described above. It is noted that the bond extending left from the silicon atom bonds to an oxygen atom. The bond indicated by a wavy line in Formula (a) bonds to the surface of the nanodiamond particle.

In Formula (a) mentioned above, R⁵ and R⁶, which may be identical or different, each represent a hydrogen atom or an aliphatic hydrocarbon group having from 1 to 3 carbon atoms. Examples of the aliphatic hydrocarbon group having from 1 to 3 carbons include: a linear or branched alkyl group, such as a methyl group, an ethyl group, a propyl group, and an isopropyl group; a linear or branched alkenyl group, such as a vinyl group and an allyl group; and an alkynyl group, such as an ethynyl group and a propynyl group. Among the groups, the linear or branched alkyl groups are preferred.

In Formula (a) mentioned above, 1 and m, which may be identical or different, each represent an integer of 0 or more. The order of bonding the constituent unit indicated by 1 and the constituent unit indicated by m is not particularly limited. More specifically, the silicon atom in Formula (a) to be bonded to an oxygen atom in Formula (1) or (2) may be a silicon atom in the constituent unit indicated by 1, or may be a silicon atom in the constituent unit indicated by m. Similarly, the oxygen atom in Formula (a) to be bonded to R⁶ in Formula (a) may be an oxygen atom in the constituent unit indicated by 1, or may be an oxygen atom in the constituent unit indicated by m. In addition, in a case where one of 1 and m is an integer of 1 or more while the other is an integer of 2 or more, the method of bonding the constituent unit indicated by 1 and the constituent unit indicated by m may be any of random, alternating, and block.

In a case where the polyoxyalkylene chain-containing surface-modified ND has multiple R¹ to R⁶, X, 1, m, or n, the multiple R¹ to R⁶, X, 1, m, and n may be identical or different from each other.

Note that in Formulas (1) and (2) above, the structure in which R³ and R⁴ are a hydrogen atom indicates a structure in which, for example, an unreacted alkoxysilyl group in the polyoxyalkylene chain-containing surface-modifying group bonded to the ND particle is hydrolyzed. In addition, the structure in which R³ and R⁴ are an aliphatic hydrocarbon group having from 1 to 3 carbons indicates a structure in which, for example, an unreacted alkoxysilyl group remains in the polyoxyalkylene chain-containing surface-modifying group bonded to the ND particle. In addition, the structure in which R³ and R⁴ are a group represented by Formula (a) above indicates a structure resulted from, for example, a reaction between an unreacted alkoxysilyl group in the polyoxyalkylene chain-containing surface-modifying group bonded to the ND particle and an alkoxysilyl group in another polyoxyalkylene chain-containing surface-modifying group bonded to an unreacted polyoxyalkylene chain-containing silane coupling agent, to be described later, and/or the ND particle by dehydration condensation.

The surface-modified ND containing the polyoxyalkylene chain-containing surface-modifying group can be produced, for example, through modifying in which ND particles are reacted with a polyoxyalkylene chain-containing silane coupling agent.

The ND particles that are reacted with the silane coupling agent preferably have hydroxyl groups at the surfaces. It is noted that ND particles that are not surface-modified typically have hydroxyl groups (-OH) at the surfaces. For the ND particles, only one type of ND particles may be used, or two or more types of ND particles may be used.

The polyoxyalkylene chain-containing silane coupling agent is preferably a compound represented by Formula (1') below. One of the polyoxyalkylene chain-containing silane coupling agent described above may be used, or two or more thereof may be used.

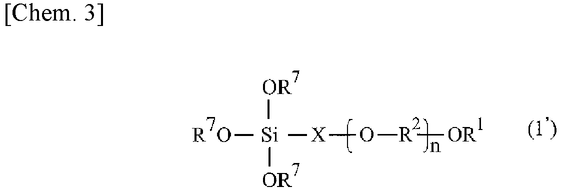

In Formula (1') mentioned above, R¹, R², X, and n are each the same as those illustrated and described in Formulas (1) to (3) mentioned above, and the preferred aspects thereof are also the same. In the case of using two or more of the compounds represented by Formula (1'), the multiple R¹, R², X, and n may be identical or different.

In Formula (1') mentioned above, R⁷, which may be identical or different, represents an aliphatic hydrocarbon group having from 1 to 3 carbon atoms. Examples of the aliphatic hydrocarbon group having from 1 to 3 carbons include: a linear or branched alkyl group, such as a methyl group, an ethyl group, a propyl group, and an isopropyl group; a linear or branched alkenyl group, such as a vinyl group and an allyl group; and an alkynyl group, such as an ethynyl group and a propynyl group. Among the groups, the linear or branched alkyl groups are preferred.

The modifying mentioned above is preferably performed in a solvent. Examples of the solvent include those listed and described later as the dispersion medium and other organic solvents. Examples of the organic solvents include: aliphatic hydrocarbons (especially, linear saturated aliphatic hydrocarbons), such as hexane, heptane, and octane; aromatic hydrocarbons, such as benzene, toluene, and xylene; alicyclic hydrocarbons, such as cyclohexane and methylcyclohexane; aprotic polar solvents, such as dimethylformamide (DMF), dimethylacetamide, N-methylpyrrolidone, and dimethyl sulfoxide; halogenated hydrocarbons, such as chloroform, dichloromethane, dichloroethane, carbon tetrachloride, chlorobenzene, and trifluoromethylbenzene; chain or cyclic ethers, such as diethyl ether, diisopropyl ether, dimethoxyethane, tetrahydrofuran (THF), and dioxane; and esters, such as ethyl acetate and butyl acetate. Among these solvents, a cyclic ether (e.g., THF) and a chain ketone (e.g., MEK, MIBK) are preferred. One of the solvents listed above may be used, or two or more thereof may be used.

The modifying mentioned above is performed in such a way that a mixed solution containing a dried nanodiamond, a silane coupling agent, and a solvent is stirred in a reaction vessel.

In the modifying mentioned above, in a case where ND particle aggregates (agglutinates), with ND particles agglutinated to form secondary particles, are included in the ND particles, the reaction between the polyoxyalkylene chain-containing silane coupling agent and the ND particles may be developed while disintegrating or dispersing the ND particles. Thus, the ND particle aggregates can be disintegrated into primary particles, the surfaces of the ND primary particles can be modified, and the dispersibility of the ND particles can be improved.

Examples of the method for disintegrating or dispersing the ND particles include methods that process the ND particles using a high shearing mixer, a high shear mixer, a homomixer, a ball mill, a bead mill, a high pressure homogenizer, an ultrasonic homogenizer, a colloid mill, or a jet mill. Among these, implementing an ultrasonic treatment in the presence of a disintegrating medium (such as zirconia beads for example) is preferred. Note that the use of zirconia beads as a disintegrating medium also, as a result, makes it possible to obtain a surface-modified ND composite with zirconia attached thereto or a battery electrolytic solution containing zirconia. The ultrasonic treatment produces cavitation (microbubbles), and the jet blast produced at the time of breakage of the cavitation provides the disintegrating medium with a significantly great kinetic energy. Then, the disintegrating medium collides with the ND aggregates and gives impact energy to release the MD particles from the ND aggregates (disintegration). The silane coupling agent then acts on the dissociated ND particles, and bonds thereto. In a case where the ND particles includes ND agglutinates formed by agglutination of the ND particles, the ND agglutinates can be disintegrated to form primary particles, the surface of the ND primary particles can be modified, and surface-modified NDs having excellent dispersibility can be obtained.

The diameter of the disintegration medium (such as zirconia beads for example) is, for example, from 15 to 500 µm, preferably from 15 to 300 µm, and particularly preferably from 15 to 100 µm.

The ratio of the ND particles to the silane coupling agent (former:latter, ratio by mass) supplied for the reaction is, for example, 2:1 to 1:80. Furthermore, the concentration of the ND particles in the solvent is, for example, from 0.5 to 10% by mass, and the concentration of the silane coupling agent in the solvent is, for example, from 5 to 60% by mass.

The reaction time for the ND particles and the silane coupling agent is, for example, from 4 to 20 hours. Furthermore, the reaction is preferably developed while heat generated is removed with the use of ice water or the like.

The polyglycerin chain-containing surface-modifying group preferably contains a polyglycerin chain in which a hydrogen atom in at least one hydroxyl group is substituted by a monovalent organic group. The polyglycerin chain in the polyglycerin chain-containing surface-modifying group may directly bind to the ND particle or may bind to the ND particle via a divalent group. Examples of the divalent group include divalent groups listed as Y in Formula (4-2) to be described below.

Examples of the monovalent organic group include a substituted or unsubstituted hydrocarbon group (a monovalent hydrocarbon group), a substituted or unsubstituted heterocyclic group (a monovalent heterocyclic group), a group in which two or more of the aforementioned groups are bonded, and a group in which an aforementioned group is bonded with a linking group. The bonded group may be directly bonded or may be bonded via a linking group. Examples of the linking group include an amino group, an ether bond, an ester bond, a phosphinic acid group, a sulfide bond, a carbonyl group, an organic group-substituted amide group, an organic group-substituted urethane bond, an organic group-substituted imide bond, a thiocarbonyl group, a siloxane bond, and a group in which two or more of those listed above are bonded. Furthermore, the linking group is a group that attaches to an oxygen atom derived from a hydroxyl group at a terminal of a polyglycerin chain, and examples thereof include a group that binds to the oxygen atom to form an ester group and a group that binds to the oxygen atom to form a urethane bond (such as a carbamoyl group).

Examples of the hydrocarbon group of the monovalent organic group include, for example, an aliphatic hydrocarbon group, an alicyclic hydrocarbon group, an aromatic hydrocarbon group, and a group in which two or more of those listed above are bonded.

Examples of the aliphatic hydrocarbon group include an alkyl group, an alkenyl group, and an alkynyl group. Examples of the alkyl group include a C₁₋₂₀ alkyl group such as a methyl group, an ethyl group, a propyl group, an isopropyl group, a butyl group, a hexyl group, an octyl group, an isooctyl group, a decyl group, and a dodecyl group, preferably a C₁₋₁₀ alkyl group, and more preferably a C₁₋₄ alkyl group. Examples of the alkenyl group include a C₂₋₂₀ alkenyl group such as a vinyl group, an allyl group, a methallyl group, a 1-propenyl group, an isopropenyl group, a 1-butenyl group, a 2-butenyl group, a 3-butenyl group, a 1-pentenyl group, a 2-pentenyl group, a 3-pentenyl group, a 4-pentenyl group, and a 5-hexenyl group, preferably a C₂₋₁₀ alkenyl group, and more preferably a C₂₋₄ alkenyl group. Examples of the alkynyl group include a C₂₋₂₀ alkynyl group such as an ethynyl group and a propynyl group, preferably a C₂₋₁₀ alkynyl group, and more preferably a C₂₋₄ alkynyl group.

Examples of the alicyclic hydrocarbon group include: a C₃₋₁₂ cycloalkyl group, such as a cyclopropyl group, a cyclobutyl group, a cyclopentyl group, a cyclohexyl group, and a cyclododecyl group; a C₃₋₁₂ cycloalkenyl group, such as a cyclohexenyl group; and a C₄₋₁₅ crosslinked cyclic hydrocarbon group, such as a bicycloheptanyl group and a bicycloheptenyl group.

Examples of the aromatic hydrocarbon group include a C₆₋₁₄ aryl group, such as a phenyl group and a naphthyl group (especially, a C₆₋₁₀ aryl group).

Examples of the heterocycle forming the above heterocyclic group include an aromatic heterocycle and a non-aromatic heterocycle. Examples of such a heterocycle include a 3 to 10-membered ring (preferably a 4 to 6-membered ring) having a carbon atom and at least one heteroatom (for example, oxygen atom, sulfur atom, and nitrogen atom) as atoms constituting the ring, and a condensed ring thereof. Specific examples thereof include a heterocycle containing an oxygen atom as a heteroatom (for example, a 3-membered ring, such as an oxirane ring; a 4-membered ring, such as an oxetane ring; a 5-membered ring, such as a furan ring, a tetrahydrofuran ring, an oxazole ring, an isoxazole ring, and a γ-butyrolactone ring; a 6-membered ring, such as a 4-oxo-4H-pyran ring, a tetrahydropyran ring, and a morpholine ring; a condensed ring, such as a benzofuran ring, an isobenzofuran ring, a 4-oxo-4H-chromene ring, a chroman ring, and an isochroman ring; and a crosslinked ring, such as a 3-oxatricyclo[4.3.1.1^{4,8}]undecan-2-one ring and a 3-oxatricyclo[4.2.1.0^{4,8}]nonan-2-one ring), a heterocycle containing a sulfur atom as a heteroatom (for example, a 5-membered ring, such as a thiophene ring, a thiazole ring, an isothiazole ring, and a thiadiazole ring; a 6-membered ring, such as a 4-oxo-4H-thiopyran ring; and a condensed ring, such as a benzothiophene ring), and a heterocycle containing a nitrogen atom as a heteroatom (for example, a 5-membered ring, such as a pyrrole ring, a pyrrolidine ring, a pyrazole ring, an imidazole ring, and a triazole ring; a 6-membered ring, such as an isocyanuric ring, a pyridine ring, a pyridazine ring, a pyrimidine ring, a pyrazine ring, a piperidine ring, and a piperazine ring; and a condensed ring, such as an indole ring, an indoline ring, a quinoline ring, an acridine ring, a naphthyridine ring, a quinazoline ring, and a purine ring).

Furthermore, examples of the group in which an aliphatic hydrocarbon group and an alicyclic hydrocarbon group are bonded include a cyclohexylmethyl group and a methylcyclohexyl group. Examples of the group in which an aliphatic hydrocarbon group and an aromatic hydrocarbon group are bonded include a C₇₋₁₈ aralkyl group (especially, a C₇₋₁₀ aralkyl group), such as a benzyl group and a phenethyl group; a C₆₋₁₀ aryl-C₂₋₆ alkenyl group, such as a cinnamyl group; a C₁₋₄ alkyl-substituted aryl group, such as a tolyl group; and a C₂₋₄ alkenyl-substituted aryl group, such as a styryl group.

Examples of the group in which two or more of the aforementioned monovalent hydrocarbon group and/or the aforementioned monovalent heterocyclic group are bonded via a linking group include a group in which the aforementioned monovalent hydrocarbon group and/or the aforementioned monovalent heterocyclic group is bonded with an alkoxy group, an alkenyloxy group, an alkynyloxy group, an aryloxy group, an aralkyloxy group, an acyloxy group, an alkylthio group, an alkenylthio group, an arylthio group, an aralkylthio group, an acyl group, an alkenylcarbonyl group, an arylcarbonyl group, an aralkylcarbonyl group, an alkoxycarbonyl group, an alkenyloxycarbonyl group, an aryloxycarbonyl group, an aralkyloxycarbonyl group, a dialkylamino group, an acylamino group, an oxetanyl group-containing group, or a carbamoyl group, or, a group in which the aforementioned monovalent hydrocarbon group and/or the aforementioned monovalent heterocyclic group is bonded with two or more of the groups listed above.

The monovalent organic group may have a substituent. Examples of the substituent include: a halogen atom, such as a fluorine atom, a chlorine atom, a bromine atom, and an iodine atom; a hydroxyl group; a mercapto group; a carboxy group; an amino group; and an oxo group.

The monovalent organic group is preferably a group represented by Formula (4-1) below.

-X¹-R⁸ (4-1)

In Formula (4-1) above, X¹ represents a single bond, -C(=O)-, or -C(=O)-NH-. R⁸ represents a monovalent organic group, and an atom that binds to X¹ is a carbon atom.

Examples of the monovalent organic group of R⁸ include a substituted or unsubstituted hydrocarbon group (a monovalent hydrocarbon group), a substituted or unsubstituted heterocyclic group (a monovalent heterocyclic group), and a group in which two or more of the aforementioned groups are bonded. The bonded group may be directly bonded or may be bonded via a linking group. Examples of the linking group include an amino group, an ether bond, an ester bond, a phosphinic acid group, a sulfide bond, a carbonyl group, an organic group-substituted amide group, an organic group-substituted urethane bond, an organic group-substituted imide bond, a thiocarbonyl group, a siloxane bond, and a group in which two or more of those listed above are bonded. Examples of each of the monovalent hydrocarbon group, the monovalent heterocyclic group, and the group in which two or more of the aforementioned groups are bonded include those listed and described as the monovalent organic group in the polyglycerin chain-containing surface-modifying group (a monovalent organic group bonded to an oxygen atom derived from a hydroxyl group at a terminal of a polyglycerin chain).

Among these, R⁸ described above is preferably a substituted or unsubstituted hydrocarbon group, more preferably an alkyl group, even more preferably an alkyl group having from 1 to 18 carbons, further preferably an alkyl group having from 1 to 6 carbons, still further preferably an alkyl group having from 1 to 4 carbons, and particularly preferably an ethyl group and a butyl group. When there are multiple groups represented by Formula (4-1) above contained in the polyglycerin chain-containing surface-modifying group, R⁸s in the groups represented by Formula (4-1) above may be identical or different from each other.

The polyglycerin chain-containing surface-modifying group in which a hydrogen atom in at least one hydroxyl group in a polyglycerin chain is substituted by a monovalent organic group preferably has a polyglycerin chain represented by Formula (4-2) below. Note that the polyglycerin chain includes a polyglycerin chain having a linear chain structure, a branched chain structure, and a cyclic structure.

-Y-(C₃H₆O₂)p-(C₃H₅O₂R⁹)q-OR¹⁰ (4-2)

The [C₃H₆O_{2]} indicated by "p" in Formula (4-2) above has at least one of the structures represented by Formulas (5) to (7) below.

-OCH₂-CHOH-CH₂- (5)

-OCH(CH₂OH)-CH₂- (6)

-OCH₂-CH(CH₂OH)- (7)

The [C₃H₅O₂R⁹] indicated by "q" in Formula (4-2) above has at least one of the structures represented by Formulas (8) to (10) below.

-OCH₂-CH(OR⁹)-CH₂- (8)

-OCH(CH₂OR⁹)-CH₂- (9)

-OCH₂-CH(CH₂OR⁹)- (10)

In Formula (4-2) above, p and q each represent an average degree of polymerization (number average degree of polymerization) of the repeating units in parentheses. P is a value of 0 or greater, q is a value of 0 or greater, and p + q is a value of 1 or greater. However, when R¹⁰ is a hydrogen atom, q represents a value greater than 0. The value of p + q is preferably from 1 to 100, more preferably from 2 to 40, and even more preferably from 3 to 30. When the value of p + q is 1 or greater, the steric hindrance between the surface-modifying groups is sufficient, and dispersion in the dispersion medium is facilitated. When the value of p + q is 50 or less, the surface-modifying groups are kept from being entangled, and dispersion in the dispersion medium is facilitated. In addition, properties as a nanodiamond material are less likely to be impaired. Note that the value of [q/(p + q)] is preferably 0.6 or greater, such as from 0.8 to 1.0.

Note that the average degree of polymerization is defined as the number of glycidol units constituting a polyglycerin chain bonded to one surface functional group of the raw material nanodiamond. The number of surface functional groups of the raw material nanodiamond can be determined by carrying out elemental analysis or acid number measurement of the raw material nanodiamond, or by the two techniques in combination.

In Formula (4-2), R⁹ represents a monovalent organic group, and preferably represents a group represented by Formula (4-1) above. Examples of the monovalent organic group of R⁹ include those listed and described as the monovalent organic group in the polyglycerin chain-containing surface-modifying group (a monovalent organic group bonded to an oxygen atom derived from a hydroxyl group at a terminal of a polyglycerin chain).

In Formula (4-2) above, [-OR¹⁰] represents a terminal of a polyglycerin chain, while R¹⁰ represents a hydrogen atom or a monovalent organic group, preferably represents a group represented by Formula (4-1) above. When R¹⁰ is a monovalent organic group, the multiple R¹⁰s in Formula (4-2) above is preferably the same. Examples of the monovalent organic group of R¹⁰ include those listed and described as the monovalent organic group in the polyglycerin chain-containing surface-modifying group (a monovalent organic group bonded to an oxygen atom derived from a hydroxyl group at a terminal of a polyglycerin chain).

In Formula (4-2), Y represents a single bond or a divalent group, and a bond extending from Y to the left binds to the ND particle. Examples of the divalent group include an amino group (-NH-), an ether bond (-O-), an ester bond (-C(=O)O-), a phosphinic acid group (-PH(=O)O-), a sulfide bond (-S-), a carbonyl group (-C(=O)-), an amide group (-C(=O)-NH-), a urethane bond (-NH-C(=O)-O-), an imide bond (-C(=O)-NH-C(=O)-), a thiocarbonyl group (-C(=S)-), a siloxane bond (-Si-O-), a divalent hydrocarbon group, and a group in which two or more of those listed above are bonded. Examples of the divalent hydrocarbon group include a residue in which one hydrogen atom is removed from the monovalent hydrocarbon group. Furthermore, the divalent group may have a substituent. Examples of the substituent include those listed and described as the substituent that the monovalent organic group may have.

Among these, Y described above is preferably a single bond, -NH-, -O-,-C(=O)O-, -PH(=O)O-, and -S-, and more preferably a single bond.

In Formula (4-2) above, the binding order of the constituent unit indicated by "p" and the constituent unit indicated by "q" is not particularly limited. That is, the oxygen atom that binds to Y in Formula (4-2) may be an oxygen atom in the constituent unit indicated by "p", or may be an oxygen atom in the constituent unit indicated by "q". Similarly, the carbon atom in Formula (4-2) that binds to OR¹⁰ in Formula (4-2) may be a carbon atom in the constituent unit indicated by "p", or may be a carbon atom in the constituent unit indicated by "q". In a case where one of p and q has a value of 1 or greater while the other has a value of 2 or greater, the method of binding the constituent unit indicated by "p" and the constituent unit indicated by "q" may be any of random, alternating, and block. When there are multiple constituent units indicated by "q", the multiple R⁹s may be identical or different from each other. In a case where the multiple R⁹s are different from each other, the binding form of the constituent unit indicated by "q" may be a random, alternating, or block form.

A mass ratio of ND to polyglycerin chain-containing surface-modifying group in the polyglycerin chain surface-modified ND [ND/polyglycerin chain-containing surface-modifying group] is not particularly limited, but is preferably from 0.5 to 1.0, and more preferably from 0.6 to 0.8. When the mass ratio is 0.5 or greater, especially 0.6 or greater, properties as a nanodiamond material are less likely to be impaired. When the mass ratio is 1.0 or less, especially 0.8 or less, the degree of modification of the polyglycerin chain-containing surface-modifying group is sufficient, and dispersibility in the battery electrolytic solution is superior. The mass ratio can be determined based on a weight loss rate as measured by a thermogravimetric analysis, with the weight loss being considered as the mass of the polyglycerin chain-containing surface-modifying group.

As a first aspect, the polyglycerin chain-containing surface-modified ND preferably has an absorption peak from around 1510 to 1540 cm⁻¹ and an absorption peak from around 1700 to 1730 cm⁻¹ in the FT-IR spectrum. The polyglycerin chain-containing surface-modified ND having such an absorption peak is inferred to be a surface-modified ND represented by Formula (4-1) above in which X¹ is -C(=O)-NH-. The absorption peak from around 1510 to 1540 cm⁻¹ is inferred to be a peak originating from the N-H stretching vibration while the absorption peak from around 1700 to 1730 cm⁻¹ is inferred to be a peak originating from the C=O stretching vibration. The absorption peak may vary slightly depending on the R⁸ in Formula (4-1) above.

Furthermore, as a second aspect, the polyglycerin chain-containing surface-modified ND preferably has an absorption peak from around 1730 to 1750 cm⁻¹ in the FT-IR spectrum. The polyglycerin chain-containing surface-modified ND having such an absorption peak is inferred to be a surface-modified ND in which X¹ in Formula (4-1) is -C(=O)-. An intense, sharp absorption peak from around 1730 to 1750 cm⁻¹ is inferred to be a peak originating from the C=O stretching vibration. The absorption peak may vary slightly depending on the R⁸ in Formula (4-1) above.

The polyglycerin chain-containing surface-modified ND preferably has a peak from around 140 to 200 ppm in the ¹³C-NMR spectrum. The polyglycerin chain-containing surface-modified ND having such a peak is inferred to be a polyglycerin chain-containing surface-modified ND in which X¹ in Formula (4-1) contains a carbonyl carbon such as -C(=O)- or -C(=O)-NH-. Furthermore, the polyglycerin chain-containing surface-modified ND preferably has a peak from around 60 to 85 ppm in the ¹³C-NMR spectrum. This peak is inferred to be a peak originating from polyglycerin. Furthermore, the polyglycerin chain-containing surface-modified ND preferably has a peak from around 5 to 45 ppm in the ¹³C-NMR spectrum. The polyglycerin chain-containing surface-modified ND having such a peak is inferred to be a polyglycerin chain-containing surface-modified ND in which R in Formula (4-1) contains a monovalent aliphatic hydrocarbon group. This peak may vary slightly depending on the R⁸ in Formula (4-1) above.

A median size (D50) of the polyglycerin chain-containing surface-modified ND, when being dispersed in at least one electrolytic solution, is preferably from 5 to 100 nm, more preferably from 5 to 80 nm, and even more preferably from 5 to 50 nm, in order to achieve a 0.1 mass% content ratio of surface-modified ND. When the median size is within such a range, dispersibility in an electrolytic solution is superior.

The polyglycerin chain-containing surface-modified ND can be obtained by ring-opening polymerization of glycidol directly on the ND particles. The ND particles naturally have carboxyl groups and hydroxyl groups formed in the production process, and the surfaces of the NDs can be modified with polyglycerin chains by reacting these functional groups with glycidol.

The reaction between the ND particles and glycidol (ring-opening polymerization) can be carried out, for example, by adding glycidol and a catalyst to the ND particles in an inert gas atmosphere and heating to 50 to 100°C. An acidic catalyst or a basic catalyst can be used as the catalyst. Examples of the acidic catalyst include boron trifluoride etherate, acetic acid, and phosphoric acid. Examples of the basic catalyst include triethylamine, pyridine, dimethylaminopyridine, and triphenylphosphine.

Conditions of ring-opening polymerization of glycidol can be referred to: S. R. Sandler et al., J. Polym. Sci., Polym. Chem. Ed., Vol. 4, 1253 (1966); E. J. Vanderberg, J. Polym. Sci., Polym. Chem. Ed., vol. 23, 915 (1985); and G. R. Newcome et al., Dendritic Macromolecules: Concepts, Syntheses, Perspectives, VCH, Weinheim (1996).

The polyglycerin chain-containing surface-modified ND can also be obtained by ring-opening polymerization of glycidol on ND particles in which a functional group containing active hydrogen is introduced to the surfaces. The functional group containing active hydrogen is not particularly limited, and examples thereof include an amino group, a hydroxyl group, a carboxyl group, a mercapto group (a thiol group), and a phosphinic acid group. A method for introducing the functional group containing active hydrogen to ND particles can be referred to, for example, JP 2012-82103 A and JP 2010-248023 A. The ring-opening polymerization of glycidol on ND particles in which a functional group containing active hydrogen is introduced to the surfaces can be performed in the same manner as in the ring-opening polymerization of glycidol on ND particles described above.

The surface-modifying group in which a hydrogen atom of a hydroxyl group in at least one polyglycerin chain is substituted by a monovalent organic group can be obtained, for example, by reacting an alcohol, an isocyanate ester, or a carboxylic acid chloride with the polyglycerin chain surface-modified ND obtained by ring-opening polymerization of glycidol as described above. The compounds to be used in the reaction can be selected as appropriate according to the type of the desired surface modifying group. One of an alcohol, an isocyanate ester, and a carboxylic acid chloride may be used, or two or more thereof may be used.

When an alcohol is used, the polyglycerin chain-containing surface-modified ND can be obtained by reacting the surface-modified ND to which a polyglycerin chain has been introduced and the alcohol to cause dehydration condensation and form an ether bond. When an isocyanate ester is used, the polyglycerin chain-containing surface-modified ND can be obtained by reacting the surface-modified ND to which a polyglycerin chain has been introduced and the isocyanate ester to add the isocyanate group in the isocyanate ester and the aforementioned hydroxyl group and form a urethane bond (carbamoyl group). Furthermore, when a carboxylic acid chloride is used, the polyglycerin chain-containing surface-modified ND can be obtained by reacting the surface-modified ND to which a polyglycerin chain has been introduced and the carboxylic acid chloride and form an ester bond.

The alcohol, the isocyanate ester, and the carboxylic acid chloride can be selected as appropriate according to the polyglycerin chain-containing surface-modified ND to be obtained. An organic group bonded to the hydroxyl group in the alcohol, an organic group on the nitrogen atom in the isocyanate ester, and an organic group bonded to the carbonyl group in the carboxylic acid chloride each corresponds to R⁸ in Formula (4-1) above, and examples thereof include the monovalent organic groups listed and described as R⁸ above.

Among these, the alcohol is preferably a C₁₋₁₈ alcohol, more preferably ethanol, n-butanol, and n-hexanol.

Among these, the isocyanate ester is preferably an alkyl isocyanate, more preferably a C₁₋₁₈ alkyl isocyanate, and even more preferably ethyl isocyanate, n-butyl isocyanate, and n-hexyl isocyanate.

Among these, the carboxylic acid chloride is preferably an acyl chloride, and from the number of carbons in the acyl group, it is preferably a C₁₋₁₉ alkyl, and more preferably valeryl chloride.

A reaction with the alcohol, the isocyanate ester, or the carboxylic acid chloride may be performed in a solvent. Examples of the solvent include the organic solvents described above. The reaction can be performed, for example, by adding a catalyst to the ND particles in an inert gas atmosphere and stirring at room temperature. The catalyst is preferably a basic catalyst. Examples of the basic catalyst include a tertiary amine such as triethylamine, pyridine, dimethylaminopyridine, and triphenylphosphine. Note that when the basic catalyst is a liquid, the basic catalyst may be used as the reaction solvent.

A ratio of the polyglycerin chain surface-modified ND particles to be subjected to a reaction to the alcohol, the isocyanate ester, and/or the carboxylic acid chloride (former:latter, mass ratio) is, for example, from 2:1 to 1:80. Furthermore, a concentration of the polyglycerin chain surface-modified ND particles in the solvent is, for example, from 0.5 to 10 mass%, and a concentration of the isocyanate ester in the solvent is, for example, from 5 to 60 mass%.

A reaction time between the polyglycerin chain surface-modified ND particles and the alcohol, the isocyanate ester, and/or the carboxylic acid chloride is, for example, from 4 to 24 hours.

A known or commonly used electrolyte that can be used in a battery electrolytic solution can be used as the electrolyte. The electrolyte is preferably an electrolyte that can be used in a non-aqueous electrolytic solution, and a lithium salt is preferable. Examples of the lithium salt include LiPF₆, LiBF₄, LiNCF₃SO₃, LiN(SO₂F)₂, LiClO₄, LiAsF₆, Li₂SiF₆, LiOSO₂CₖF₍₂ₖ₊₁₎ (k being an integer from 1 to 8), LiN(SO₂CₖF₍₂ₖ₊₁₎)₂ (k being an integer from 1 to 8), LiPFₙ(CₖF₍₂ₖ₊₁₎)₍₆₋ₙ₎ (n being an integer from 1 to 5, k being an integer from 1 to 8), LiBFₙCₖF₍₂ₖ₊₁₎ (n being an integer from 1 to 3, k being an integer from 1 to 8), LiB(C₂O₄)₂ (lithium bisoxalylborate), LiBF₂(C₂O₄) (lithium difluorooxalylborate), LiPF₃(C₂O₄) (lithium trifluorooxalylphosphate), LiC(SO₂R^{I})(SO₂R^{II})(SO₂R^{III}), LiN(SO₂OR^{IV})(SO₂OR^{V}), and LiN(SO₂R^{VI})(SO₂OR^{VII}). Note that in the formulas above, R^{I} to R^{VII} all or independently represent a perfluoroalkyl group having from 1 to 8 carbons. Among these, from the viewpoint of achieving superior dispersibility of the nanocarbon material, LiPF₆, LiBF₄, LiN(SO₂CF₃)₂, LiNCF₃SO₃, and LiN(SO₂F)₂ are preferable. One of the electrolytes may be used, or two or more thereof may be used.

The dispersion medium functions as a solvent for the electrolyte and a dispersion medium for the nanocarbon material in the battery electrolytic solution. A known or commonly used solvent that can be used in a battery electrolytic solution can be used as the dispersion medium. The dispersion medium is preferably a non-aqueous solvent, and examples thereof include a carbonate compound such as a saturated cyclic carbonate and a chain carbonate, a cyclic carboxylate ester, a cyclic ether, and a sulfone compound. One of the dispersion media may be used, or two or more thereof may be used.

Examples of the saturated cyclic carbonate include those containing an alkylene group having from 2 to 4 carbons, preferably a saturated cyclic carbonate having from 2 to 3 carbons. Examples of the saturated cyclic carbonate include ethylene carbonate, propylene carbonate, and butylene carbonate.

Examples of the chain carbonate include those having from 3 to 7 carbons, preferably a chain carbonate having from 3 to 5 carbons. Examples of the chain carbonate include dimethyl carbonate, diethyl carbonate, di-n-propyl carbonate, diisopropyl carbonate, n-propyl isopropyl carbonate, ethyl methyl carbonate, methyl-n-propyl carbonate, n-butyl methyl carbonate, isobutyl methyl carbonate, t-butyl methyl carbonate, ethyl-n-propyl carbonate, n-butyl ethyl carbonate, isobutyl ethyl carbonate and t-butyl ethyl carbonate.

Additional examples of the chain carbonate include a chain carbonate having a fluorine atom (hereinafter, also referred to as "fluorinated chain carbonate"). A number of fluorine atoms contained in the fluorinated chain carbonate is 1 or more. An upper limit of the number of fluorine atoms is, for example, 6, preferably 4. When the fluorinated chain carbonate has multiple fluorine atoms, the multiple fluorine atoms may bind to the same carbon atom or may bind to different carbon atoms. Examples of the fluorinated chain carbonate include a fluorinated dimethyl carbonate derivative, a fluorinated ethyl methyl carbonate derivative, and a fluorinated diethyl carbonate derivative.

Examples of the fluorinated dimethyl carbonate derivative include fluoromethyl methyl carbonate, difluoromethyl methyl carbonate, trifluoromethyl methyl carbonate, bis(fluoromethyl) carbonate, bis(difluoromethyl) carbonate, and bis(trifluoromethyl) carbonate.

Examples of the fluorinated ethyl methyl carbonate derivative include 2-fluoroethyl methyl carbonate, ethyl fluoromethyl carbonate, 2,2-difluoroethyl methyl carbonate, 2-fluoroethyl fluoromethyl carbonate, ethyl difluoromethyl carbonate, 2,2,2-trifluoroethyl methyl carbonate, 2,2-difluoroethyl fluoromethyl carbonate, 2-fluoroethyl difluoromethyl carbonate, and ethyl trifluoromethyl carbonate.

Examples of the fluorinated diethyl carbonate derivative include ethyl-(2-fluoroethyl) carbonate, ethyl-(2,2-difluoroethyl) carbonate, bis(2-fluoroethyl) carbonate, ethyl-(2,2,2-trifluoroethyl) carbonate, 2,2-difluoroethyl-2'-fluoroethyl carbonate, bis(2,2-difluoroethyl) carbonate, 2,2,2-trifluoroethyl-2'-fluoroethyl carbonate, 2,2,2-trifluoroethyl-2',2'-difluoroethyl carbonate, and bis(2,2,2-trifluoroethyl) carbonate.

Examples of the cyclic carboxylate ester include a cyclic carboxylate ester having from 3 to 12 carbons, preferably a cyclic carboxylate ester having from 3 to 10 carbons, more preferably a cyclic carboxylate ester having from 3 to 8 carbons. Examples of the cyclic carboxylate ester include γ-butyrolactone, γ-valerolactone, γ-caprolactone, and epsilon-caprolactone.

Examples of the cyclic ether include a cyclic ether having from 3 to 6 carbons, preferably a cyclic ether having from 3 to 5 carbons. Examples of the cyclic ether include tetrahydrofuran, 2-methyltetrahydrofuran, 3-methyltetrahydrofuran, 1,3-dioxane, 2-methyl-1,3-dioxane, 4-methyl-1,3-dioxane, 1,4-dioxane, and fluorinated compounds thereof.

Examples of the sulfone compound include a cyclic sulfone and a chain sulfone. A number of carbons in the cyclic sulfone is, for example, from 3 to 6, preferably from 3 to 5. A number of carbons in the chain sulfone is, for example, from 2 to 6, preferably from 2 to 5. Furthermore, a number of sulfonyl groups in one molecule of the sulfone compound is not particularly limited, but is typically 1 or 2.

Examples of the cyclic sulfone include a monosulfone compound such as a trimethylenesulfone, a tetramethylenesulfone, and a hexamethylenesulfone; and
a disulfone compound such as a trimethylenedisulfone, a tetramethylenedisulfone, and a hexamethylenedisulfone.

Examples of the tetramethylenesulfone (a sulfolane) include a sulfolane, 2-methylsulfolane, 3-methylsulfolane, 2-fluorosulfolane, 3-fluorosulfolane, 2,2-difluorosulfolane, 2,3-difluorosulfolane, 2,4-difluorosulfolane, 2,5-difluorosulfolane, 3,4-difluorosulfolane, 2-fluoro-3-methylsulfolane, 2-fluoro-2-methylsulfolane, 3-fluoro-3-methylsulfolane, 3-fluoro-2-methylsulfolane, 4-fluoro-3-methylsulfolane, 4-fluoro-2-methylsulfolane, 5-fluoro-3-methylsulfolane, 5-fluoro-2-methylsulfolane, 2-fluoromethylsulfolane, 3-fluoromethylsulfolane, 2-difluoromethylsulfolane, 3-difluoromethylsulfolane, 2-trifluoromethylsulfolane, 3-trifluoromethylsulfolane, 2-fluoro-3-(trifluoromethyl)sulfolane, 3-fluoro-3-(trifluoromethyl)sulfolane, 4-fluoro-3-(trifluoromethyl)sulfolane, and 5-fluoro-3-(trifluoromethyl)sulfolane.

Examples of the chain sulfone include dimethyl sulfone, ethyl methyl sulfone, diethyl sulfone, n-propyl methyl sulfone, n-propyl ethyl sulfone, di-n-propyl sulfone, isopropyl methyl sulfone, isopropyl ethyl sulfone, diisopropyl sulfone, n-butyl methyl sulfone, n-butyl ethyl sulfone, t-butyl methyl sulfone, t-butyl ethyl sulfone, monofluoromethyl methyl sulfone, difluoromethyl methyl sulfone, trifluoromethyl methyl sulfone, monofluoroethyl methyl sulfone, difluoroethyl methyl sulfone, trifluoroethyl methyl sulfone, pentafluoroethyl methyl sulfone, ethyl monofluoromethyl sulfone, ethyl difluoromethyl sulfone, ethyl trifluoromethyl sulfone, perfluoroethyl methyl sulfone, ethyl trifluoroethyl sulfone, ethyl pentafluoroethyl sulfone, di(trifluoroethyl) sulfone, perfluorodiethyl sulfone, fluoromethyl-n-propyl sulfone, difluoromethyl-n-propyl sulfone, trifluoromethyl-n-propyl sulfone, fluoromethyl isopropyl sulfone, difluoromethyl isopropyl sulfone, trifluoromethyl isopropyl sulfone, trifluoroethyl-n-propyl sulfone, trifluoroethyl isopropyl sulfone, pentafluoroethyl-n-propyl sulfone, pentafluoroethyl isopropyl sulfone, trifluoroethyl-n-butyl sulfone, trifluoroethyl-t-butyl sulfone, pentafluoroethyl-n-butyl sulfone, and pentafluoroethyl-t-butyl sulfone.

Among the dispersion media listed above, a saturated cyclic carbonate, a chain carbonate, and a cyclic carboxylate ester are preferable, and ethylene carbonate, propylene carbonate, γ-butyrolactone, dimethyl carbonate, diethyl carbonate, and ethyl methyl carbonate are more preferable, from the viewpoint of achieving superior dispersibility of the nanocarbon material.

The battery electrolytic solution may further contain a dispersant. In particular, when the nanocarbon material is ND, the battery electrolytic solution preferably contains a dispersant (sometimes referred to as "dispersant [A]") having a mass average molecular weight of 500 or greater and an amine value of 15 mg KOH/g or greater. By using such a dispersant, the dispersibility of ND particles in the battery electrolytic solution is outstanding. One of the dispersion media may be used, or two or more thereof may be used.

The mass average molecular weight of the dispersant (A) is 500 or greater, preferably 650 or greater, and more preferably 950 or greater. Furthermore, the mass average molecular weight is preferably 20000 or less, more preferably 10000 or less. Note that the mass average molecular weight in the present specification is a molecular weight measured by gel permeation chromatography (GPC) and calibrated with a polystyrene standard.

The amine value of the dispersant (A) is 15 mg KOH/g or greater, preferably 18 mg KOH/g or greater, more preferably 20 mg KOH/g or greater, and even more preferably 30 mg KOH/g or greater. Furthermore, the amine value is preferably 100 mg KOH/g or less, more preferably 90 mg KOH/g or less, and even more preferably 60 mg KOH/g or less.

Among these, the dispersant (A) is preferably a compound having a structure derived from a polyalkylene glycol monoalkyl ether, especially a structure derived from polyethylene glycol monoalkyl ether or a structure derived from polypropylene glycol monoalkyl ether, a compound having a carbamate structure, and a compound having a structure derived from polycaprolactone. One of the compounds may be contained, or two or more thereof may be contained. Furthermore, one compound alone may have one or two or more of the structures described above.

A commercially available product can be used as the dispersant (A). Examples of the commercially available product as the dispersant (A) include a product under the trade name "DISPERBYK-2008", a product under the trade name "BYK-9076", a product under the trade name "BYK-9077", and a product under the trade name "ANTI-TERRA-U", all available from BYK-Chemie GmbH.

When the dispersant (A) is used, the nanocarbon material is preferably a surface-modified ND having a silane compound bonded to the surface.

The silane compound preferably has a hydrolyzable group and an aliphatic hydrocarbon group. The silane compound used for surface modification of the ND particles may be only one type, or may be two or more types.

Among these, the silane compound preferably contains at least a compound represented by Formula (11-1) below.

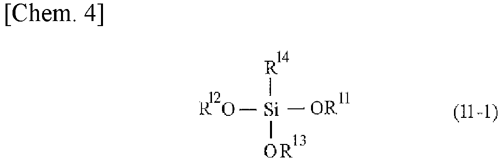

In Formula (11-1), R¹¹, R¹², and R¹³ all or independently represent an aliphatic hydrocarbon group having from 1 to 3 carbons. R¹⁴ represents an aliphatic hydrocarbon group having one or more carbons.

Examples of the aliphatic hydrocarbon group having from 1 to 3 carbons as R¹¹, R¹², and R¹³ include: a linear or branched alkyl group, such as a methyl group, an ethyl group, a propyl group, and an isopropyl group; a linear or branched alkenyl group, such as a vinyl group and an allyl group; and an alkynyl group, such as an ethynyl group and a propynyl group. Among the groups, the linear or branched alkyl groups are preferred.

R¹⁴ is preferably an aliphatic hydrocarbon group having one or more carbons, and examples thereof include: a linear or branched alkyl group, such as a methyl group, an ethyl group, a propyl group, an isopropyl group, a butyl group, an isobutyl group, an s-butyl group, a t-butyl group, a pentyl group, a hexyl group, an n-octyl group, a 2-ethylhexyl group, a nonyl group, an isononyl group, a decyl group, an isodecyl group, a lauryl group, a myristyl group, an isomyristyl group, a butyloctyl group, an isocetyl group, a hexyldecyl group, a stearyl group, an isostearyl group, an octyldecyl group, an octyldodecyl group, and an isobehenyl group; a linear or branched alkenyl group, such as a vinyl group, an allyl group, a 1-butenyl group, a 7-octenyl group, an 8-nonenyl group, a 9-decenyl group, a 11-dodecenyl group, and an oleyl group; and a linear or branched alkynyl group, such as an ethynyl group, a propynyl group, a decynyl group, a pentadecynyl group, and an octadecynyl group.

Among these, R¹⁴ is preferably an aliphatic hydrocarbon group having 4 or more carbons, particularly preferably an aliphatic hydrocarbon group having 6 or more carbons, from the viewpoint of achieving greater steric hindrance to obtain an excellent aggregation suppressing effect and impart higher dispersibility. Note that the upper limit of the number of carbons of the aliphatic hydrocarbon group is, for example, 25, and is preferably 20, and more preferably 12. Furthermore, the aliphatic hydrocarbon group is preferably a linear or branched alkyl group or alkenyl group, particularly preferably a linear or branched alkyl group.

When R¹⁴ is an aliphatic hydrocarbon group having 4 or more carbons, miscibility to an organic dispersion medium is exhibited, and a larger steric hindrance can be obtained, resulting in an excellent aggregation suppression effect. Furthermore, the groups containing an oxygen atom (the OR¹¹' group and the OR¹²' group in Formula [11]) exhibit miscibility to the dispersion medium, and therefore miscibility to the dispersion medium is excellent, and even better dispersibility in the battery electrolytic solution can be exhibited.

Therefore, examples of the ND particles surface-modified by a silane compound (silane compound surface-modified ND particles) include ND particles having a structure in which the surface is modified by a group represented by Formula (11) below.

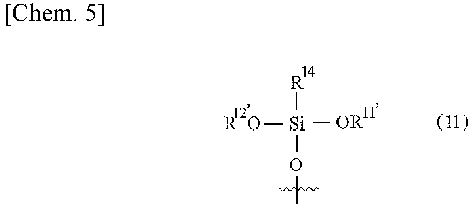

In Formula (11), R¹⁴ represents an aliphatic hydrocarbon group having one or more carbons. R¹¹' and R¹²' both or independently represent a hydrogen atom, an aliphatic hydrocarbon group having from 1 to 3 carbons, or a group represented by Formula (b) below. The bond indicated by a wavy line in the formula bonds to the surface of the nanodiamond particles.

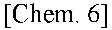

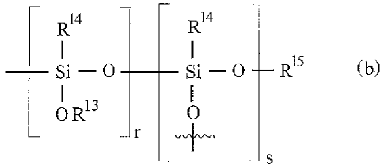

In Formula (b), R¹⁴ represents an aliphatic hydrocarbon group having one or more carbons. R¹³ and R¹⁵ both or independently represent a hydrogen atom or an aliphatic hydrocarbon group having from 1 to 3 carbons. r and s both or independently represent an integer of 0 or more. Note that the bond extending to the left from the silicon atom bonds to an oxygen atom. In addition, the bond marked by a wavy line binds to the surface of a nanodiamond particle. The R¹⁴ in Formula (11) corresponds to the R¹⁴ in Formula (11-1).

Examples of the aliphatic hydrocarbon group having from 1 to 3 carbons as R¹¹', R¹²', R¹³, and R¹⁵ in Formula (11) above include: a linear or branched alkyl group, such as a methyl group, an ethyl group, a propyl group, and an isopropyl group; a linear or branched alkenyl group, such as a vinyl group and an allyl group; and an alkynyl group, such as an ethynyl group and a propynyl group. Among the groups, the linear or branched alkyl groups are preferred.

r and s, each a number of constituent units represented by the content in brackets, both or independently represent an integer of 0 or more. In a case where r and s are each 2 or more, the bonding method of two or more constituent units may be any of random, alternating, or block.

The silane compound surface-modified ND particles may have, in addition to a group represented by Formula (11) above, another functional group, such as a group represented by Formula (11') below or another surface functional group such as an amino group, a hydroxyl group, and a carboxyl group. The above other functional groups may be only one type or may be two or more types.

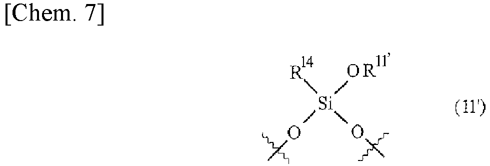

In Formula (11') above, R¹¹' and R¹⁴ are the same as those described above. The bond indicated by a wavy line in the formula bonds to the surface of the ND particles.

In a case where a silane compound, especially a compound represented by Formula (11-1) above, is used as the compound that performs a surface treatment, the hydrolyzable alkoxysilyl groups, such as the OR¹¹ group, the OR¹² group, and the OR¹³ group of the compound in Formula (11-1), are easily hydrolyzed to form silanol groups. Therefore, for example, one of the silanol groups undergoes dehydration condensation with a hydroxyl group present on the surface of the ND particle and forms a covalent bond, while the other silanol groups of the silane compound can condense and form a siloxane bond (Si-O-Si) with the remaining two silanol groups. Thus, the compound can impart, to the ND particles, miscibility to the dispersion medium, and superb dispersibility in the battery electrolytic solution can be exhibited.

The battery electrolytic solution may contain only the electrolyte, the nanocarbon material, and the dispersion medium. Furthermore, the battery electrolytic solution may additionally contain a dispersant, and may further contain, within a range in which the effects described above are not impaired, a known or commonly used additive for a battery electrolytic solution such as an overcharge inhibitor.

A content ratio of the nanocarbon material in the battery electrolytic solution is, for example, from 1 to 100000 mass ppm, preferably from 10 to 10000 mass ppm, and more preferably from 100 to 1000 mass ppm. The battery electrolytic solution has an outstanding dispersibility of nanocarbon material at a content ratio within such a range.

A content ratio of the electrolyte in the battery electrolytic solution is, for example, from 5 to 30 mass%, preferably from 8 to 18 mass%, and more preferably from 10 to 15 mass%. When the content ratio is within such a range, conductivity is appropriate.

A content ratio of the dispersion medium in the battery electrolytic solution is, for example, from 75 to 94 mass%. Furthermore, a content ratio of the non-aqueous solvent with respect to the total amount of the dispersion medium is, for example, 60 mass% or greater, preferably 70 mass% or greater, even more preferably 80 mass% or greater, and particularly preferably 90 mass% or greater.

A content ratio of the dispersant, such as the dispersant (A), in the battery electrolytic solution per 100 parts by mass of the total amount of the nanocarbon material is, for example, from 0.1 to 10000 parts by mass, preferably from 10 to 1000 parts by mass, and more preferably from 50 to 500 parts by mass. When the content ratio of the dispersant is within such a range, dispersibility of nanocarbon material in the battery electrolytic solution is superior.

The battery electrolytic solution has a haze value of preferably 5 or less, more preferably 3 or less, even more preferably 1 or less. Since the battery electrolytic solution has excellent dispersibility of nanocarbon material, it is possible to obtain an electrolytic solution having such a haze value. The haze value can be measured according to JIS K 7136.

A viscosity at 25°C of the battery electrolytic solution is preferably from 0.1 to 100 mPa·s, more preferably from 0.5 to 50 mPa·s, and even more preferably from 1.0 to 30 mPa·s. A rotor and a rotational speed of the rotor at the time of measuring the viscosity are selected as appropriate based on the measured values. The viscosity can be measured using, for example, an EMS viscometer (trade name "EMS 1000", available from Kyoto Electronics Co., Ltd.).

The battery electrolytic solution may be an electrolytic solution for either a primary battery or a secondary battery. Of these, the battery electrolytic solution is preferably an electrolytic solution for a secondary battery because, as a result of excellent dispersibility of nanocarbon material, the nanocarbon material freely moves between the cathode and the anode through the holes in the separator, forming a smooth layer of metal on an electrode or an active material during charging and discharging. In particular, the battery electrolytic solution is preferably an electrolytic solution for a lithium ion battery because the battery electrolytic solution has outstanding dispersibility in an electrolytic solution for a lithium ion battery. Note that a shape of the battery is not particularly limited, and may be, for example, a cylindrical shape, a square shape, a laminate shape, a coin shape, or a shape of a large size.

According to the battery electrolytic solution described above, a battery electrolytic solution in which a nanocarbon material is highly dispersed can be provided. Thus, the battery electrolytic solution can be applied to a battery, especially a lithium ion battery, for practical use. Furthermore, when the battery electrolytic solution is used in a battery provided with a separator, the nanocarbon material can freely move between the cathode and the anode through the holes in the separator. Furthermore, even when the battery electrolytic solution is used in a battery, such as a lithium ion secondary battery, in which dendrites tend to form as a result of repeated charging and discharging or overcharging, a smooth layer of lithium can be formed, suppressing the formation of dendrites and preventing piercing of the separator by dendrites. Therefore, by using the battery electrolytic solution described above, it is not necessary to use a separator with a high strength, and the options for separator that can be used are expanded.

Each aspect disclosed in the present specification can be combined with any other feature disclosed herein. The configurations, combinations thereof, and the like in each embodiment of the present invention are examples, and various configurational additions, omissions, substitutions, and other changes may be made as appropriate without departing from the spirit of the present invention. Furthermore, inventions according to the present invention are not limited by the embodiments or the following examples, but are limited only by the claims.

### Examples

An embodiment of the present invention will be described in further detail below based on examples.

### Example 1

Surface-modified ND particles and an electrolytic solution were produced through the following processes.

### (Production of Surface-Modified ND Particles)

First, the formation of ND by a detonation method was performed. In the present formation, first, a molded explosive attached with an electric detonator was placed inside a pressure-resistant vessel for detonation, and the vessel was sealed. The vessel was made of iron and had a capacity of 15 m³. As the explosive, 0.50 kg of a mixture of TNT and RDX was used. The mass ratio of the TNT and RDX (TNT/RDX) in the explosive was 50/50. The electric detonator was then triggered to detonate the explosive in the vessel (formation of ND by detonation method). Subsequently, the container and its interior were left standing for 24 hours at room temperature, and were thereby cooled. After this cooling, the ND crude product was recovered by scraping with a spatula the ND crude product (including soot and aggregates of the ND particles produced by the detonation method described above) deposited on the inner wall of the container.

The ND crude product formed by performing the formation described above multiple times was then subjected to an acid treatment. Specifically, 6 L of 10 mass% hydrochloric acid was added to 200 g of the ND crude product to prepare a slurry, and the slurry was subjected to a heating treatment for 1 hour under reflux at the normal pressure condition. The heating temperature in this acid treatment was from 85 to 100°C. Next, after cooling, the solid (containing the ND agglutinates and soot) was washed with water by decantation. The solid was repeatedly washed with water by decantation until the pH of the precipitation solution reached 2 from the low pH side.

An oxidation treatment was then performed. Specifically, 6 L of a 98 mass% sulfuric acid and 1 L of a 69 mass% nitric acid were added to the precipitate solution (containing ND agglutinates) prepared through decantation after the acid treatment to prepare a slurry. Then, the slurry was heated under reflux for 48 hours at the normal pressure condition. The heating temperature in this oxidation treatment was from 140 to 160°C. Next, after cooling, the solid (containing the ND agglutinates) was washed with water by decantation. The initial supernatant liquid from the water washing was colored, and therefore washing of the solid content with water by decantation was repeated until the supernatant liquid became visually clear.

Next, the precipitate solution (solution containing ND agglutinates) obtained through the water-washing treatment described above was subjected to drying to obtain a dry powder (ND agglutinates). Evaporation to dryness performed with the use of an evaporator was employed as a technique for the drying treatment in the drying.

Next, 10 mmol of a polyalkylene glycol (trade name "UNIOX M-1000", from NOF Corporation) was dissolved in 100 mL of THF, and 60 mmol of triethylamine was slowly added to the solution. Furthermore, 10 mmol of isocyanate propyltrimethoxysilane (3-(Trimethoxysilyl) propyl isocyanate) (from Tokyo Chemical Industry Co., Ltd.) was added thereto, and with a reflux tube attached thereto, the mixture was reacted under the condition of 80°C for 48 hours. After completion of the reaction, the THF was distilled off by distillation under reduced pressure with an evaporator, and furthermore, the triethylamine was completely removed by still standing at 110°C for 24 hours in a vacuum dryer to obtain a polyoxyalkylene chain-containing silane coupling agent ([(MeO)₃SiC₃H₆NHC (=O)-PEG], terminal: aliphatic hydrocarbon group, and number average molecular weight as polyoxyalkylene: 1000).

0.30 g of the ND agglutinates obtained through the drying mentioned above was weighed and placed into a reaction vessel; then, 15 cc of methyl ethyl ketone, 8 g of the polyoxyalkylene chain-containing silane coupling agent, and 15 g of zirconia balls (trade name: "YTZ", diameter: 30 µm, available from Tosoh Corporation) were added to the reaction vessel. After the addition, ultrasonic treatment was performed for 15 hours using an ultrasonic dispersing machine (model "UH-600S", available from SMT Co., Ltd.) under cooling in ice water, during which a tip of an oscillator of the ultrasonic dispersing machine was immersed in the solution in the reaction vessel. Thus, the ND particles and the polyoxyalkylene chain-containing silane coupling agent were reacted. The mixture was initially gray; however, the particle diameter gradually became smaller, and the dispersion state became better. Finally, the mixture became a uniform, black liquid. This is thought to be because ND particles were sequentially released (disintegrated) from the ND agglutinates, the polyoxyalkylene chain-containing silane coupling agent acted on the dissociated ND particles and bonded to the ND particles, and the surface-modified ND particles were dispersed and stabilized in the toluene solvent. To the obtained dispersion, an equal volume of a mixture of toluene and hexane having a volume ratio of 1:2 (toluene:hexane) was added, and then centrifugation was performed at 13000 x g for 15 minutes to remove the supernatant. 15 cc of methyl ethyl ketone was added to the obtained precipitate, and ultrasonic treatment was performed again for 30 minutes using an ultrasonic dispersing machine (model "UH-600S", available from SMT Co., Ltd.), during which a tip of an oscillator of the ultrasonic dispersing machine was immersed in the solution in the reaction vessel, resulting in a dispersion from which the unreacted silane coupling agent was removed. Next, methyl ethyl ketone was distilled off from the obtained dispersion by distillation under reduced pressure using an evaporator, and the resulting product was allowed to stand in a vacuum dryer for 24 hours at 100°C to obtain a dry solid content. An EC:DEC (1:1 v/v%) (available from Kishida Chemical Co., Ltd.) in which 1M of LiBF₄ was dissolved was added to the dry solid content in a manner that the ND content in the vial reached 0.05 mass%; then, stirring for 30 minutes using an ultrasonic cleaner was performed, resulting in a transparent ND-dispersed electrolytic solution. The obtained electrolytic solution was subjected to centrifugation under the condition of 6900 x g for 15 minutes to obtain a supernatant (transparent ND-dispersed electrolytic solution). The median size (particle size D50) of the surface-modified ND particles obtained in this process was 150 nm.

### Example 2

ND particles and an alkyl chain-containing silane coupling agent (hexyltrimethoxysilane) were reacted by ultrasonic treatment for 15 hours in the same manner as in Example 1, except that, during the reaction of ND particles and silane coupling agent, 1.2 g of hexyltrimethoxysilane was used instead of 8 g of the polyoxyalkylene chain-containing silane coupling agent used in the Example 1 and 15 cc of methyl isobutyl ketone was used instead of 15 cc of methyl ethyl ketone. After 15 hours of ultrasonic treatment, methanol of twice the volume as the obtained product was added, and the resulting mixture was subjected to centrifugation under the condition of 13000 x g for 15 minutes to remove the supernatant. 15 cc of methyl isobutyl ketone was added to the obtained precipitate, and ultrasonic treatment was performed again for 30 minutes using an ultrasonic dispersing machine (model "UH-600S", available from SMT Co., Ltd.), during which a tip of an oscillator of the ultrasonic dispersing machine was immersed in the solution in the reaction vessel, resulting in a dispersion from which the unreacted silane coupling agent was removed. The median size (particle size D50) of the surface-modified ND particles obtained in this process was 25 nm. Next, the ND dispersion was mixed with 15 cc of a separately prepared methyl isobutyl ketone in which a dispersant "BYK-9077" (available from BYK Japan KK) having a mass of 100 times the mass of ND solid content was dissolved; then, the methyl isobutyl ketone was distilled off by distillation under reduced pressure using an evaporator, and the resulting product was allowed to stand in a vacuum dryer for 24 hours at 100°C to obtain a dry solid content. An EC:DEC (1:1 v/v%) (available from Kishida Chemical Co., Ltd.) in which 1M of LiBF4 was dissolved was added to the dry solid content in a manner that the ND content in the vial reached 0.05 mass%; then, stirring for 30 minutes using an ultrasonic cleaner was performed, resulting in a transparent ND-dispersed electrolytic solution. The transparent ND-dispersed electrolytic solution was allowed to stand for 20 days, and the resulting supernatant was subjected to centrifugation under the condition of 6900 x g for 15 minutes to obtain a supernatant (transparent ND-dispersed electrolytic solution). The median size (particle size D50) of the surface-modified ND particles obtained in this process was 35.8 nm.

### Example 3

4.5 g of the dry powder (ND agglutinates) obtained via the drying in Example 1 was allowed to stand inside a furnace core tube of a gas atmosphere furnace (trade name "Gas Atmosphere Tube Furnace KTF045N1", available from Koyo Thermo Systems Co., Ltd.), and nitrogen gas was continuously passed through the furnace core tube at a flow rate of 1 L/min for 30 minutes. Then, the flowing gas was switched from nitrogen to a mixed gas of oxygen and nitrogen, and the mixed gas was continuously passed through the furnace core tube at a flow rate of 1 L/min. The oxygen concentration in the mixed gas is 4 vol.%. After switching to the mixed gas, the temperature inside the furnace was raised to a temperature set for heating of 400°C. The temperature was raised at a rate of 10°C/min to 380°C, a temperature 20°C lower than the temperature set for heating, and then at a rate of 1°C/min from 380°C to 400°C. Then, the oxygen oxidation treatment was carried out on the ND powder in the furnace while the temperature condition inside the furnace was maintained at 400°C. The duration of the treatment was 3 hours.

Next, a hydrogenation process was performed using the gas atmosphere furnace described above. Specifically, the ND powder that had undergone the oxygen oxidation process was placed inside the gas atmosphere furnace, and nitrogen gas was continuously passed through the gas atmosphere furnace at a flow rate of 1 L/minute for 30 minutes. Then, the flowing gas was switched from nitrogen to a mixed gas of hydrogen and nitrogen, and the mixed gas was continuously passed through the furnace core tube at a flow rate of 1 L/minute. The hydrogen concentration in the mixed gas was 2 vol.%. After switching to the mixed gas, the temperature inside the furnace was raised to a temperature set for heating of 600°C. The temperature rising rate was 10°C/minute. Then, hydrogenation treatment was carried out on the ND powder in the furnace while the temperature inside the furnace was maintained at 600°C. The duration of the treatment was 5 hours. An ND powder that had undergone hydrogenation treatment was produced as described above.

The disintegration was then performed. Specifically, first, 0.9 g of the ND powder that had undergone hydrogenation treatment and 29.1 ml of pure water were added to a 50 ml sample bottle and mixed to obtain approximately 30 ml of a slurry. After adjusting the pH to 4 with IN hydrochloric acid, the slurry was subjected to an ultrasonic treatment. In the ultrasonic treatment, the slurry was subjected to ultrasonic irradiation for 2 hours using an ultrasonic irradiator (trade name "Ultrasonic Cleaner AS-3", available from AS ONE Corporation). Thereafter, bead milling was performed using a bead milling apparatus (trade name "Parallel 4-Tube Sand Grinder Model LSG-4U-2L", available from Aimex Co., Ltd.). Specifically, 30 ml of the slurry after the ultrasonic irradiation and zirconia beads with a diameter of 30 µm were charged in a 100-ml vessel (available from Aimex Co., Ltd.), which was the mill vessel, and the vessel was sealed. Then, the apparatus was operated to perform bead milling. In this bead milling, the amount of zirconia beads that were charged was, for example, 33 volume% of the capacity of the mill vessel, the rotational speed of the mill vessel was 2570 rpm, and the duration of the milling was 2 hours.

Next, the slurry having undergone the disintegration step as described above was subjected to centrifugation treatment (classification operation) using a centrifuge. The centrifugal force in this centrifugation treatment was 20000 x g, and the duration of the centrifugation was 10 minutes. Next, 10 ml of supernatant of the ND-containing solution that had been subjected to this centrifugation treatment was collected. In this manner, an ND dispersion in which nanodiamond was dispersed in pure water was obtained. This nanodiamond dispersion had a solid content concentration of 2.1 mass% and a pH of 5.40. The median size (particle size D50) of the ND dispersion obtained as described above was 35.8 nm.

### Modification

The ND particle aqueous dispersion obtained above was dried using an evaporator, and a black dry powder was obtained. The resulting dry powder (100 mg) was added to 12 mL of glycidol placed in a glass reactor, ultrasonicated in an ultrasonic cleaner (trade name "BRANSON 2510", available from Marshall Scientific LLC.) at room temperature for 2 hours, and dissolved. This solution was allowed to react at 140°C for 20 hours while it was being stirred under a nitrogen atmosphere. The reaction mixture was cooled; then, after 120 mL of methanol was added, the reaction mixture was ultrasonicated and then centrifuged at 50400 x g for 2 hours, resulting in a precipitate. To this precipitate, 120 mL of methanol was added, and ultrasonification-centrifugation was repeated five times in the same manner. Finally, the precipitate was dialyzed with pure water using a dialysis membrane (Spectra/Prodialysis membrane, MWCO of 12 to 14 kDa) to replace the residual methanol with water and was lyophilized, resulting in hydrophilic ND particles modified with polyglycerin (PG-ND particles) as a gray powder. The ratio of ND particle to surface-modifying group measured by a TG-DTA thermal analysis, or ND particle:surface-modifying group, was 1:0.7.

Pyridine was added to the PG-ND gray powder, and the concentration was adjusted to 4 g/L based on the mass of the ND particles, resulting in a PG-ND particle pyridine dispersion. 4 g of methyl isocyanate was added to 20 ml of the resulted PG-ND particle pyridine dispersion, and the mixture was stirred at room temperature for 30 minutes. Then, 40 ml of hexane was added, and the mixture was centrifuged at 20000 × g for 10 minutes to obtain a precipitate. After this cleaning was repeated three times to remove pyridine, the product was allowed to stand in a vacuum dryer for 24 hours at 100°C to obtain a dry solid content. An EC:DEC (1:1 v/v%) (available from Kishida Chemical Co., Ltd.) in which 1M of LiBF₄ was dissolved was added to the dry solid content in a manner that the ND content in the vial reached 0.05 mass%; then, stirring for 30 minutes using an ultrasonic cleaner was performed, resulting in a transparent ND-dispersed electrolytic solution. The obtained electrolytic solution was subjected to centrifugation under the condition of 6900 × g for 15 minutes to obtain a supernatant (transparent ND-dispersed electrolytic solution). The median size (particle size D50) of the surface-modified nanodiamond particles obtained in this process was 60.3 nm, and the mass ratio [ND/polyglycerin chain-containing surface-modifying group] determined by a thermogravimetric analysis was 0.60.

### Example 4

A transparent ND-dispersed electrolytic solution was obtained by stirring with an ultrasonic cleaner for 30 minutes in the same manner as in Example 3 except for, during the modification in Example 3, 4 g of butyl isocyanate was used instead of 4 g of methyl isocyanate and an EC:DEC (1:1 v/v%) (available from Kishida Chemical Co., Ltd.) in which 1M of LiBF₆ was dissolved was used instead of the EC:DEC (1:1 v/v%) (available from Kishida Chemical Co., Ltd.) in which 1M of LiBF₄ was dissolved. The obtained electrolytic solution was subjected to centrifugation under the condition of 6900 × g for 15 minutes to obtain a supernatant (transparent ND-dispersed electrolytic solution). The median size (particle size D50) of the surface-modified nanodiamond particles obtained in this process was 78.8 nm, and the mass ratio [ND/polyglycerin chain-containing surface-modified group] determined by a thermogravimetric analysis was 0.74.

### Particle size D50

The median sizes (particle sizes D50) of ND particles in the ND-dispersed electrolytic solutions of the examples, obtained as described above, were measured from the nanodiamond particle size distributions obtained by a dynamic light scattering method. Specifically, the nanodiamond particle size distributions were measured by a dynamic light scattering method (non-contact backscattering method) with the use of an instrument (trade name "Zetasizer Nano ZS") available from Malvern Panalytical Ltd.

### Thermogravimetric analysis

A sample (approximately 3 mg) was heated in an air atmosphere at a temperature rising rate of 20°C/minute using a TG/DTA (thermogravimetric-differential thermal analysis) device (trade name "EXSTAR6300", available from SII Technology), and the weight loss was measured. Alumina was used as the reference material.

### ¹³C-NMR analysis

The surface-modified nanodiamond obtained in Example 4 was subjected to a ¹³C-NMR analysis. Specifically, the dry powder of the surface-modified nanodiamond and the hydrophilic ND particles modified with polyglycerin (PG-ND) obtained in Example 4 were dispersed in deuterated DMSO (0.3% tetramethylsilane) using an ultrasonic cleaner, and then the ¹³C-NMR spectrum was measured using a Brucker AVANCE (600 MHz). Note that the measurement was performed at 25°C, and the number of integrations was 200000 times.

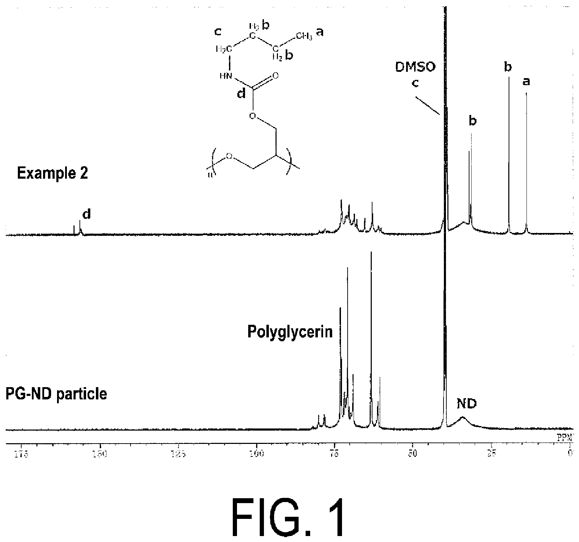

The ¹³C-NMR spectrum of the surface-modified nanodiamond produced in Example 4 is shown in FIG. 1. In Example 4, a peak from around 13 to 14 ppm and a peak b from around 19 to 20 ppm and from around 31 to 32 ppm were observed. These peaks were originated from the hydroxyl groups on the polyglycerin chain being ended with an alkyl chain. In addition, a peak d originating from the C=O groups due to the hydroxyl groups on the polyglycerin chain being ended with alkyl isocyanate was observed from around 155 to 157 ppm. Meanwhile, only peaks from around 58 to 82 ppm originating from polyglycerin chain and from around 24 to 38 ppm originating from nanodiamond were observed in the ¹³C-NMR spectrum of the hydrophilic ND particles modified with polyglycerin (PG-ND particles).

### Example 5

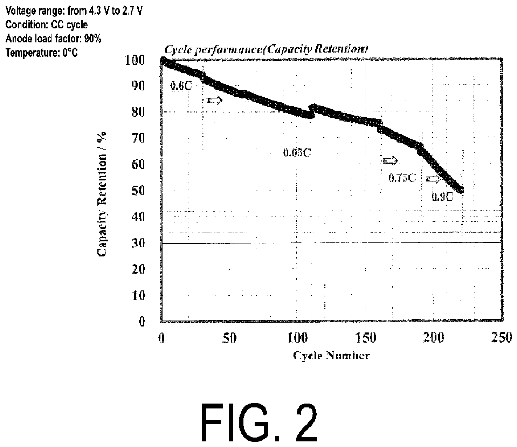

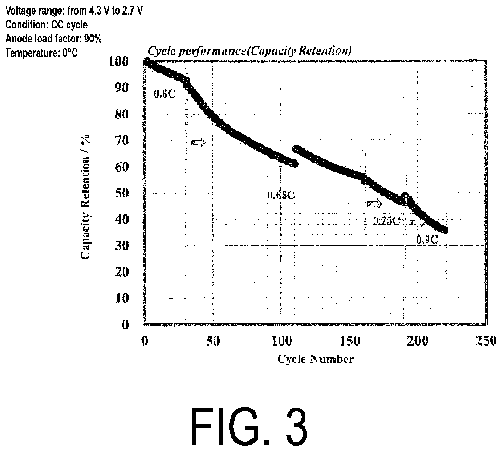

The surface-modified nanodiamond (dry solid content) obtained in Example 4 was added to 50 g of a solution (1M) in which LiPF₆ was dissolved in a mixed solvent (EC:EMC, 3:7 v/v%) (available from Kishida Chemical Co., Ltd.) in a manner that the component concentration of nanodiamond was 500 ppm, resulting in an electrolytic solution. Furthermore, as a comparison, an electrolytic solution in which no nanodiamond was added to the solution was prepared. In a single-layer laminate cell for evaluation, NMC111 was used in the cathode while a graphitized MCMB was used in the anode. The initial capacity of the NMC cathode was 150 mAh/g grade (initial efficiency 85%), and the initial capacity of the MCMB anode was 340 mAh/g grade (initial efficiency 93%). The test cells used had a cathode punched into a standard size of 30 mm x 50 mm and an anode punched into a standard size of 32 mm × 52 mm, both electrodes vacuum-dried at 170°C for 10 hours. The dried electrodes were oriented towards each other sandwiching a PE microporous membrane separator vacuum dried under 70°C for 3 hours, and the product was inserted into an Al laminate. After each of the electrolytic solutions for evaluation was injected, vacuum sealing was performed. For the single-layer laminate cells produced in this manner, comparison of capacity change was performed while the measurement rate was gradually increased from a baseline of 0°C and an anode load factor of 90% (charging voltage of 4.3 V). Plotted graphs of capacity retention versus cycle number are shown in FIGS. 2 and 3. As shown in FIG. 2, the battery employing the ND-dispersed electrolytic solution maintained a capacity of 50% after 220 cycles of test. Meanwhile, as shown in FIG. 3, the capacity of the battery without ND added was reduced to 36%.

Variations of the invention according to the present invention will be described below.

[Appendix 1] A battery electrolytic solution containing a dispersion medium, an electrolyte dissolved in the dispersion medium, and a nanocarbon material dispersed in the dispersion medium with an average dispersed particle size of 500 nm or less, preferably 400 nm or less, more preferably 300 nm or less, more preferably 200 nm or less, and particularly preferably 150 nm or less.

[Appendix 2] The battery electrolytic solution according to Appendix 1, containing the nanocarbon material in an amount from 10 to 100000 mass ppm, preferably from 10 to 10000 mass ppm, and more preferably from 100 to 1000 mass ppm.

[Appendix 3] The battery electrolytic solution according to Appendix 1 or 2, wherein the nanocarbon material is at least one selected from the group consisting of a nanodiamond, a fullerene, a graphene, a graphene oxide, a nanographite, a carbon nanotube, a carbon nanofilament, an onion-like carbon, a diamond-like carbon, an amorphous carbon, a carbon black, a carbon nanohorn, and a carbon nanocoil.

[Appendix 4] The battery electrolytic solution according to any one of Appendices 1 to 3, wherein the nanocarbon material contains a nanodiamond particle.

[Appendix 5] The battery electrolytic solution according to any one of Appendices 1 to 4, wherein the nanocarbon material is a nanodiamond particle having a primary particle size of 10 nm or less such as from 1 to 10 nm, preferably 8 nm or less such as from 2 to 8 nm, and more preferably 6 nm or less such as from 4 to 6 nm.

[Appendix 6] The battery electrolytic solution according to any one of Appendices 1 to 5, wherein the nanocarbon material is a surface-modified nanodiamond, the surface-modified nanodiamond containing a nanodiamond particle and a surface-modifying group having a polyoxyalkylene chain that surface-modifies the nanodiamond particle.

[Appendix 7] The battery electrolytic solution according to Appendix 6, wherein the polyoxyalkylene chain is at least one selected from the group consisting of a polyethylene glycol chain, a polypropylene glycol chain, and a polybutylene glycol chain.

[Appendix 8] The battery electrolytic solution according to Appendix 6 or 7, wherein the surface-modified nanodiamond has a structure in which a terminal of the polyoxyalkylene chain ends with an aliphatic hydrocarbon group.

[Appendix 9] The battery electrolytic solution according to Appendix 8, wherein the aliphatic hydrocarbon group is an aliphatic hydrocarbon group having from 1 to 10 carbons, more preferably an aliphatic hydrocarbon group having from 1 to 6 carbons.

[Appendix 10] The battery electrolytic solution according to Appendix 8 or 9, wherein the aliphatic hydrocarbon group is a linear or branched alkyl group.

[Appendix 11] The battery electrolytic solution according to any one of Appendices 6 to 10, wherein the polyoxyalkylene chain has a number average molecular weight of, as a polyoxyalkylene, 100 or more such as from 100 to 50000, preferably 200 or more such as from 200 to 20000, more preferably 500 or more such as from 1000 to 10000, and further preferably 1000 or more such as from 1000 to 6000.

[Appendix 12] The battery electrolytic solution according to any one of Appendices 6 to 11, wherein an average degree of polymerization of the polyoxyalkylene chain is from 2 to 50, preferably from 4 to 45, and more preferably from 6 to 40.

[Appendix 13] The battery electrolytic solution according to any one of Appendices 6 to 12, wherein the surface-modifying group contains a silicon atom.

[Appendix 14] The battery electrolytic solution according to Appendix 13, wherein the silicon atom is present between the polyoxyalkylene chain and the surface-modified nanodiamond particle.

[Appendix 15] The battery electrolytic solution according to Appendix 13 or 14, wherein the silicon atom is present as a Si-O bond in the surface-modifying group.

[Appendix 16] The battery electrolytic solution according to any one of Appendices 13 to 15, wherein the surface-modified nanodiamond has a structure in which the silicon atom in the surface-modifying group is bonded to the nanodiamond particle with an oxygen atom interposed therebetween.

[Appendix 17] The battery electrolytic solution according to any one of Appendices 13 to 16, wherein the silicon atom and the polyoxyalkylene chain are bonded via a urethane bond in the surface-modifying group.

[Appendix 18] The battery electrolytic solution according to any one of Appendices 6 to 17, wherein the surface-modifying group is at least one selected from the group consisting of a group represented by Formula (1), a group represented by Formula (2), and a group represented by Formula (3): 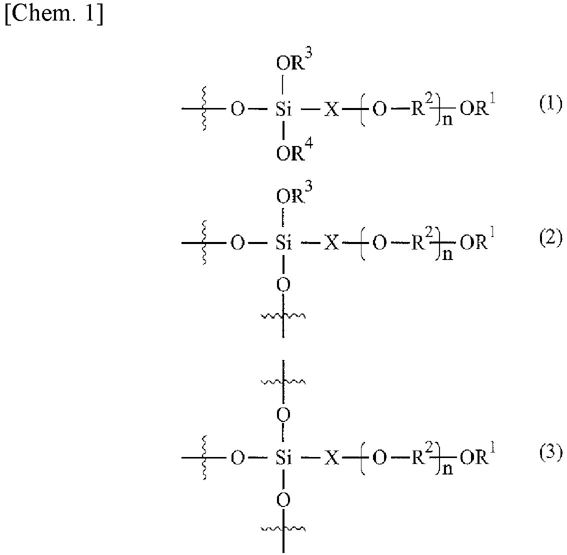 where in Formulas (1) to (3), R¹ represents a hydrogen atom or an aliphatic hydrocarbon group, preferably an aliphatic hydrocarbon group having from 1 to 10 carbons, more preferably an aliphatic hydrocarbon group having from 1 to 6 carbons; R² represents an alkylene group, preferably an alkylene group having from 1 to 4 carbons; R³ and R⁴, which may be identical or different, each represent a hydrogen atom, an aliphatic hydrocarbon group having from 1 to 3 carbon atoms, or a group represented by Formula (a); n represents the number average degree of polymerization of the oxyalkylene chain (-O-R²) and has a value of 2 or greater, preferably from 2 to 50, more preferably from 4 to 45, and even more preferably from 6 to 40; X represents a single bond or a linking group; a bond indicated by a wavy line in Formula (a) bonds to the surface of the nanodiamond particle; 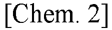 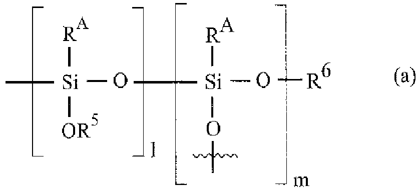 where in Formula (a), R^{A} represents [-X-(O-R²)n-OR¹], and X, R¹, R², and n in R^{A} are each identical to those in Formulas (1) to (3); R⁵ and R⁶, which may be identical or different, each represent a hydrogen atom or an aliphatic hydrocarbon group having from 1 to 3 carbon atoms; 1 and m, which may be identical or different, each represent an integer of 0 or more; a bond extending left from a silicon atom binds to an oxygen atom; and ahe bond indicated by a wavy line in Formula (a) binds to the surface of the nanodiamond particle.

[Appendix 19] The battery electrolytic solution according to Appendix 18, wherein X contains a urethane bond.

[Appendix 20] The battery electrolytic solution according to Appendix 19, wherein X is a group in which a divalent hydrocarbon group, especially a straight or branched alkylene group, is bonded with a urethane bond, preferably a group represented by -(CH₂)k-NH-C(=O)- in which C at a left end binds to a silicon atom while C at a right end binds to O in the polyoxyalkylene chain, and k represents an integer from 1 to 18, preferably an integer from 1 to 6, more preferably from 1 to 3.

[Appendix 21] The battery electrolytic solution according to any one of Appendices 1 to 20, wherein the nanocarbon material is a surface-modified nanodiamond, the surface-modified nanodiamond containing a nanodiamond particle and a surface-modifying group having a polyglycerin chain that surface-modifies the nanodiamond particle, the polyglycerin chain containing at least one hydroxyl group of which hydrogen atom is substituted by a monovalent organic group.

[Appendix 22] The battery electrolytic solution according to Appendix 21, wherein the monovalent organic group is a group represented by Formula (4-1):

-X¹-R⁸ (4-1)

where in Formula (4-1), X¹ represents a single bond, -C(=O)-, or -C(=O)-NH-; and R⁸ represents a monovalent organic group, preferably a substituted or unsubstituted hydrocarbon group, more preferably an alkyl group, more preferably an alkyl group having from 1 to 18 carbons, even more preferably an alkyl group having from 1 to 6 carbons, further preferably an alkyl group having from 1 to 4 carbons, and particularly preferably an ethyl group and a butyl group, while the atom binds to X¹ is a carbon atom.

[Appendix 23] The battery electrolytic solution according to Appendix 21 or 22, wherein the surface-modifying group is a polyglycerin chain-containing surface-modifying group represented by Formula (4-2):

-Y-(C₃H₆O₂)p-(C₃H₅O₂R⁹)q-OR¹⁰ (4-2)

where in Formula (4-2), p and q each represent an average degree of polymerization of a repeating unit in parentheses, a value for p is 0 or greater, a value for q is 0 or greater, and a value for p + q is 1 or greater, preferably from 1 to 100, more preferably from 2 to 40, and even more preferably from 3 to 30; R⁹ represents a monovalent organic group; [-OR¹⁰] represents a terminal of a polyglycerin chain, and R¹⁰ represents a hydrogen atom or a monovalent organic group; in a case where R¹⁰ is a hydrogen atom, q represents a value greater than 0; Y represents a single bond or a divalent group, preferably a single bond, -NH-, -O-, -C(=O)O-, -PH(=O)O-, or -S-, more preferably a single bond, and a bond extending from Y to left binds to the nanodiamond particle; and an oxygen atom that binds to Y in Formula (4-2) may be an oxygen atom in the constituent unit indicated by "p", or may be an oxygen atom in a constituent unit indicated by "q", while a carbon atom in Formula (4-2) that binds to OR¹⁰ in Formula (4-2) may be a carbon atom in a constituent unit indicated by "p", or may be a carbon atom in the constituent unit indicated by "q".

[Appendix 24] The battery electrolytic solution according to Appendix 23, wherein [q/(p + q)] in Formula (4-2) is 0.6 or greater, preferably from 0.8 to 1.0.

[Appendix 25] The battery electrolytic solution according to any one of Appendices 21 to 24, wherein a mass ratio of nanodiamond particle to a surface-modifying group in the surface-modified nanodiamond, or a nanodiamond particle/surface-modifying group, is from 0.5 to 1.0, preferably from 0.6 to 0.8.

[Appendix 26] The battery electrolytic solution according to any one of Appendices 21 to 25, wherein the surface-modified nanodiamond has an absorption peak from around 1510 to 1540 cm⁻¹ and an absorption peak from around 1700 to 1730 cm⁻¹ in an FT-IR spectrum.

[Appendix 27] The battery electrolytic solution according to any one of Appendices 21 to 25, wherein the surface-modified nanodiamond has an absorption peak from around 1730 to 1750 cm⁻¹ in an FT-IR spectrum.

[Appendix 28] The battery electrolytic solution according to any one of Appendices 21 to 27, wherein the surface-modified nanodiamond has a peak from around 60 to 85 ppm in a ¹³C-NMR spectrum.

[Appendix 29] The battery electrolytic solution according to any one of Appendices 21 to 28, wherein the surface-modified nanodiamond has a peak from around 140 to 200 ppm in a ¹³C-NMR spectrum.

[Appendix 30] The battery electrolytic solution according to any one of Appendices 21 to 29, wherein the surface-modified nanodiamond has a peak from around 5 to 45 ppm in a ¹³C-NMR spectrum.

[Appendix 31] The battery electrolytic solution according to any one of Appendices 21 to 30, wherein a median size, when the surface-modified nanodiamond is dispersed in at least one organic dispersion medium having a Hildebrand solubility parameter (δ) of 10 (cal/cm³)^{1/2} or less to make a content ratio of 0.1 mass%, is from 5 to 100 nm, preferably from 5 to 80 nm, more preferably from 5 to 50 nm.

[Appendix 32] The battery electrolytic solution according to any one of Appendices 4 to 31, wherein the nanodiamond particle includes a nanodiamond obtained by a detonation method, preferably a nanodiamond obtained by an air-cooling detonation method.

[Appendix 33] The battery electrolytic solution according to any one of Appendices 1 to 32, wherein the nanocarbon material contains a nanodiamond particle and a dispersant.

[Appendix 34] The battery electrolytic solution according to Appendix 33, wherein a mass average molecular weight of the dispersant is 500 or greater, preferably 650 or greater, and more preferably 950 or greater.

[Appendix 35] The battery electrolytic solution according to Appendix 33 or 34, wherein the mass average molecular weight of the dispersant is 20000 or less, preferably 10000 or less.

[Appendix 36] The battery electrolytic solution according to any one of Appendices 33 to 35, wherein an amine value of the dispersant is 15 mg KOH/g or greater, preferably 18 mg KOH/g or greater, more preferably 20 mg KOH/g or greater, and even more preferably 30 mg KOH/g or greater.

[Appendix 37] The battery electrolytic solution according to any one of Appendices 33 to 36, wherein an amine value of the dispersant is 100 mg KOH/g or less, more preferably 90 mg KOH/g or less, and even more preferably 60 mg KOH/g or less.

[Appendix 38] The battery electrolytic solution according to any one of Appendices 33 to 37, wherein the dispersant contains a compound having a structure derived from a polyalkylene glycol monoalkyl ether, especially a structure derived from polyethylene glycol monoalkyl ether or a structure derived from polypropylene glycol monoalkyl ether, a compound having a carbamate structure, or a compound having a structure derived from polycaprolactone.

[Appendix 39] The battery electrolytic solution according to any one of Appendices 33 to 38, wherein a content ratio of the dispersant in the battery electrolytic solution per 100 parts by mass of a total amount of the nanocarbon material is from 0.1 to 10000 parts by mass, preferably from 10 to 1000 parts by mass, and more preferably from 50 to 500 parts by mass.

[Appendix 40] The battery electrolytic solution according to any one of Appendices 1 to 39, wherein the dispersion medium is a non-aqueous solvent, preferably at least one selected from the group consisting of a carbonate compound, a cyclic carboxylate ester, a cyclic ether, and a sulfone compound, more preferably at least one selected from the group consisting of a saturated cyclic carbonate, a chain carbonate, and a cyclic carboxylate ester, even more preferably at least one selected from the group consisting of ethylene carbonate, propylene carbonate, γ-butyrolactone, dimethyl carbonate, diethyl carbonate, and ethyl methyl carbonate.

[Appendix 41] The battery electrolytic solution according to any one of Appendices 1 to 40, wherein the electrolyte is an electrolyte that can be used in a non-aqueous electrolytic solution, preferably a lithium salt, and more preferably at least one selected from the group consisting of LiPF₆, LiBF₄, LiN(SO₂CF₃)₂, LiNCF₃SO₃, and LiN(SO₂F)₂.

[Appendix 42] The battery electrolytic solution according to any one of Appendices 1 to 41, wherein a content ratio of the electrolyte in the battery electrolytic solution is from 5 to 30 mass%, preferably from 8 to 18 mass%, and more preferably from 10 to 15 mass%.

[Appendix 43] The battery electrolytic solution according to any one of Appendices 1 to 42, wherein a content ratio of the dispersion medium in the battery electrolytic solution is from 75 to 94 mass%.

[Appendix 44] The battery electrolytic solution according to any one of Appendices 1 to 43, wherein a content ratio of the non-aqueous solvent in a total amount of the dispersion medium is 60 mass% or greater, preferably 70 mass% or greater, even more preferably 80 mass% or greater, and further preferably 90 mass% or greater.

[Appendix 45] The battery electrolytic solution according to any one of Appendices 1 to 44, having a haze value of 5 or less, preferably 3 or less, and more preferably 1 or less.

[Appendix 46] The battery electrolytic solution according to any one of Appendices 1 to 45, having a viscosity at 25°C from 0.1 to 100 mPa·s, preferably from 0.5 to 50 mPa·s, and more preferably from 1.0 to 30 mPa·s.

[Appendix 47] A lithium ion battery employing the battery electrolytic solution according to any one of Appendices 1 to 46.

## Claims

1. A battery electrolytic solution comprising a dispersion medium, an electrolyte dissolved in the dispersion medium, and a nanocarbon material dispersed with an average dispersed particle size of 500 nm or less in the dispersion medium.

2. The battery electrolytic solution according to claim 1, containing the nanocarbon material in an amount from 10 to 100000 mass ppm.

3. The battery electrolytic solution according to claim 1 or 2, wherein the nanocarbon material is at least one selected from the group consisting of a nanodiamond, a fullerene, a graphene, a graphene oxide, a nanographite, a carbon nanotube, a carbon nanofilament, an onion-like carbon, a diamond-like carbon, an amorphous carbon, a carbon black, a carbon nanohorn, and a carbon nanocoil.

4. The battery electrolytic solution according to any one of claims 1 to 3, wherein the nanocarbon material is a nanodiamond particle having a primary particle size of 10 nm or less.

5. The battery electrolytic solution according to any one of claims 1 to 4, wherein the nanocarbon material is a surface-modified nanodiamond, the surface-modified nanodiamond containing a nanodiamond particle and a surface-modifying group having a polyoxyalkylene chain that surface-modifies the nanodiamond particle.

6. The battery electrolytic solution according to claim 5, wherein the polyoxyalkylene chain is at least one selected from the group consisting of a polyethylene glycol chain, a polypropylene glycol chain, and a polybutylene glycol chain.

7. The battery electrolytic solution according to claim 5 or 6, wherein the surface-modified nanodiamond has a structure in which a terminal of the polyoxyalkylene chain ends with an aliphatic hydrocarbon group.

8. The battery electrolytic solution according to any one of claims 5 to 7, wherein the surface-modifying group contains a silicon atom.

9. The battery electrolytic solution according to claim 8, wherein the nanocarbon material is a surface-modified nanodiamond, the surface-modified nanodiamond containing a nanodiamond particle and a surface-modifying group having a polyglycerin chain that surface-modifies the nanodiamond particle, the polyglycerin chain containing at least one hydroxyl group of which hydrogen atom is substituted by a monovalent organic group.

10. The battery electrolytic solution according to claim 9, wherein the surface-modified nanodiamond has an absorption peak from around 1510 to 1540 cm⁻¹ and an absorption peak from around 1700 to 1730 cm⁻¹ in an FT-IR spectrum.

11. The battery electrolytic solution according to claim 9, wherein the surface-modified nanodiamond has an absorption peak from around 1730 to 1750 cm⁻¹ in an FT-IR spectrum.

12. The battery electrolytic solution according to any one of claims 9 to 11, wherein the surface-modified nanodiamond has a peak approximately from 60 to 85 ppm and a peak from around 140 to 200 ppm in a ¹³C-NMR spectrum.

13. The battery electrolytic solution according to any one of claims 1 to 4, containing a nanodiamond particle as the nanocarbon material and a dispersant having a mass average molecular weight of 500 or greater and an amine value of 15 mg KOH/g or greater.

14. The battery electrolytic solution according to any one of claims 1 to 13, wherein the dispersion medium is at least one selected from the group consisting of ethylene carbonate, propylene carbonate, γ-butyrolactone, dimethyl carbonate, diethyl carbonate, and ethyl methyl carbonate.

15. The battery electrolytic solution according to any one of claims 1 to 14, wherein the electrolyte is at least one selected from the group consisting of LiPF₆, LiBF₄, LiN(SO₂CF₃)₂, LiNCF₃SO₃, and LiN(SO₂F)₂.

16. A lithium ion battery employing the battery electrolytic solution according to any one of claims 1 to 15.
